(19) Europäisches Patentamt / European Patent Office / Office européen des brevets

(11) **EP 4 380 737 B1**

(12) **EUROPEAN PATENT SPECIFICATION**

(45) Date of publication and mention
of the grant of the patent:
**01.10.2025 Bulletin 2025/40**

(21) Application number: **22764454.9**

(22) Date of filing: **04.08.2022**

(51) International Patent Classification (IPC):
**B21B 28/02** (2006.01)   **B23K 26/36** (2014.01)
**B23K 26/08** (2014.01)   **B21B 38/00** (2006.01)
**B21C 51/00** (2006.01)

(52) Cooperative Patent Classification (CPC):
**B21B 28/02; B21C 51/00; B23K 26/0624;
B23K 26/0823; B23K 26/0869; B23K 26/3576;
B23K 26/361; B23K 26/362;** B21B 38/00;
B21B 38/02; B21B 2267/06; B21B 2267/10;
B21B 2267/18

(86) International application number:
**PCT/IB2022/057279**

(87) International publication number:
**WO 2023/012730 (09.02.2023 Gazette 2023/06)**

(54) **APPARATUS AND PROCESS FOR SURFACE PROCESSING OF CYLINDRICAL BODIES, IN PARTICULAR ROLLING CYLINDERS**

VORRICHTUNG UND VERFAHREN ZUR OBERFLÄCHENBEARBEITUNG VON ZYLINDRISCHEN KÖRPERN, INSBESONDERE WALZEN

APPAREIL ET PROCÉDÉ DE TRAITEMENT DE CORPS CYLINDRIQUES, EN PARTICULIER DE CYLINDRES DE STRATIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2021 IT 202100021263**

(43) Date of publication of application:
**12.06.2024 Bulletin 2024/24**

(73) Proprietor: **Tenova S.p.A.**
**20149 Milano (IT)**

(72) Inventors:
• **GABOARDI, Paolo**
**20149 Milano (IT)**
• **TREVISAN, Claudio**
**20149 Milano (IT)**
• **GARIANO, Andrea**
**20149 Milano (IT)**
• **BOSELLI, Giovanni**
**20149 Milano (IT)**
• **PALLOTTI, Paolo**
**20149 MILANO (IT)**
• **DEMIR, Ali Gokhan**
**20133 MILANO (IT)**
• **PREVITALI, Barbara**
**20133 MILANO (IT)**

(74) Representative: **PGA S.p.A.**
**Via Mascheroni, 31**
**20145 Milano (IT)**

(56) References cited:
**WO-A1-2021/005489      JP-A- S59 179 207
US-A1- 2012 318 776**

**Description**

Field of invention

The invention is directed to an apparatus and method for processing, by means of a laser emitter, the side or shell surface of cylindrical bodies, for example, laminating cylinders in rolling mills. In detail, the invention finds preferential application for the grinding of rolling cylinders by means of a laser emitter. The laminating cylinders are intended for use in rolling mills for hot or cold rolling of flat metal products, especially strips of steel sheet, aluminum or other metal or polymeric materials, or for use in papermaking plants.

An apparatus for surface processing of cylindrical bodies according to the invention is disclosed in any one of claims 1-14. A method for surface restoration of cylindrical bodies according to the invention is disclosed in claim 15.

Background

The rolling of strips of steel, aluminum or other metal or polymeric sheet materials or paper is done by the use of laminating ( or "rolling") cylinders in rolling mills. Such strips are forced to pass between opposing rolling cylinders, which exert high pressure on the strip. The laminating cylinders may have a pattern or texturing configured to be replicated, during the rolling phase, on the laminated web on its lateral surface or mantle, also called the "table" of the laminating cylinder in the jargon. The pattern or texturing of the laminating cylinder table may include a predetermined surface roughness to be replicated on the web to be laminated.

Texturization processes performed by electrical discharge (EDT) or by a laser emitter acting on the lateral surface of the rolling cylinder are known. The surface roughness generated by the laser may be a function of the intensity of the laser beam and the distance interposed between the laser emitter and the lateral surface of the rolling cylinder.

During rolling, rolls undergo progressive deterioration determined by pressure, abrasion, temperature, type of processing, and processed material. For example, the lateral surface, or table, of a rolling cylinder may retain dirt including traces of lubricants, flakes or metal residue, adversely affecting the processing quality of rolled strip.

Additionally, the lateral surface of a rolling cylinder may wear as rolling cycles progress: for example, cylinders may gradually lose the surface roughness characteristics required to generate the required roughness on the metal strip. The surface roughness of rolling cylinders may be altered in the value of characteristic parameters such as $Ra$ or $Rpc$ above a predetermined limit, such as 20 percent of the nominal value.

Cracks, dents and localized damage of various types, shapes and depths may also occur on the lateral surface of the laminating cylinder, adversely affecting the final result on the laminated web.

Finally, the surface layer of the side or table surface of a rolling cylinder is subject to high stresses: this may generate fatigue phenomena, compromising the required surface characteristics.

Following the deterioration of a rolling cylinder, it is necessary to temporarily remove the cylinder from the rolling mill to restore its original surface characteristics.

To date, such restoration is carried out by machining, such as by grinding the cylinder using a grinding wheel process. Grinding is currently the only technological process that may be used to achieve the desired result, mainly because of the hardness of the material of which the cylinder is made and the roughness values to be obtained. Cylinder grinding involves the removal of a predetermined thickness of material from the lateral surface of the cylinder or table in order to restore proper roughness, eliminate surface defects such as cracks or dents, and restore the profile of the cylinder to the tolerances required by the rolling mill (shape of the generating element or profile, roundness, eccentricity).

The grinding technology may effectively and efficiently achieve roughness (Ra) likely in the range of 0.02 $\mu$m to 2.5 $\mu$m. Within that range, the grinding process requires making a predetermined number of passes combined with machining steps generally identified as roughing, semi-finishing and finishing, between which machining parameters are changed and, if necessary, in which the grinding wheel is changed to achieve the desired final roughness.

A conventional grinding machine requires relatively high electrical power, particularly on the order of a few tens or hundreds of kW, to enable the rolling cylinder to rotate and to overcome the friction generated by the grinding wheel forcing contact of the lateral surface of the cylinder.

The mechanical grinding operation using a grinding wheel is also accompanied by high heating of the surface of the cylinder and the cutting tool (the grinding wheel, in fact), which results in the need to use a cooling fluid to keep the local temperature within acceptable limits. The waste from the grinding process thus includes chips of the constituent metal of the rolling cylinder, emery grains, binder resin particles and emulsified cooling fluid, to define waste wet sludge to be treated appropriately.

The high electrical power required, the high thermal energy generated by grinding wheel/surface friction, and the presence of waste wet sludge contribute to the high cost of the process of restoring rolling/laminating cylinders or, generically, cylindrical bodies.

Document JPS59179207A discloses an apparatus for surface processing of cylindrical bodies using a laser beam.

Objectives of the invention

It is therefore the purpose of the present invention to solve at least one of the drawbacks and/or limitations of the previous solutions.

A first objective is to provide a method and apparatus for grinding the lateral or mantle surface of cylindrical bodies that is more energy efficient.

A further objective is to provide a method and apparatus for grinding the lateral or mantle surface of cylindrical bodies that may effectively restore the original lateral surface and tolerances in adequate time.

A further objective is to provide a method and apparatus for grinding the side or mantle surface of cylindrical bodies where the waste material is easily removed from the processing area.

An additional objective is to provide a method and apparatus for grinding the side or mantle surface of cylindrical bodies that may reduce the cost of waste material disposal.

An additional objective is to provide a method and apparatus for grinding the side or mantle surface of cylindrical bodies that may reduce the cost of the grinding process.

An additional objective is to provide a method and apparatus for grinding the side or shell surface of cylindrical bodies that may optimize the amount of material to be removed during the grinding process.

These objectives and others, which will appear more from the following description and the following aspects, are substantially achieved by a method and apparatus in accordance with one or more of the following claims and/or aspects.

BRIEF DESCRIPTION OF THE DRAWINGS

Some embodiments and some aspects of the invention will be described below with reference to the attached drawings, provided for illustrative purposes only and therefore not limiting in which:

- Figures 1-4 are top-down views of an apparatus according with the present invention;
- Figure 5 is a schematic view of a difference between the detected profile and the target profile of the lateral surface of the cylindrical body;
- Figures 6a-6p are schematic views of consecutive steps of the removal procedure;
- Figures 7a and 7b are schematic views of the peak and average power emitted by a continuous or pulsed laser beam as a function of time;
- Figure 8 schematically shows method steps in accordance with the present invention;
- Figures 9a, 9b and 9c schematically show a laser beam incident on the lateral surface of the cylindrical body and in which the focus point is positioned at different heights $\Delta f$;
- Figure 10 schematically shows an apparatus, according to the present invention, bearing a cylindrical body with partially overlapping laser imprints;
- Figures 11 and 12 schematically show an apparatus, according to a further embodiment of the present invention, bearing a cylindrical body with partially overlapping laser footprints;
- Figure 12b schematically shows an apparatus, according to an embodiment of the present invention, bearing a cylindrical body with partially overlapping laser imprints defining a serpentine trajectory;
- Figure 13 shows a flow chart representing method steps of the restoration procedure including the step of defining overlapping portions between laser footprints;
- Figure 14 shows a flow chart representing method steps of the restoration procedure including both the step of detecting the outer profile of the cylindrical body and the step of defining overlapping portions between laser footprints.

DETAILED DESCRIPTION

A cylindrical body surface processing apparatus 1 is identified in the attached tables under reference number 10, specifically for surface restoration of rolling\laminating cylinders. This apparatus may be configured to perform a grinding operation on the lateral surface of laminating cylinders.

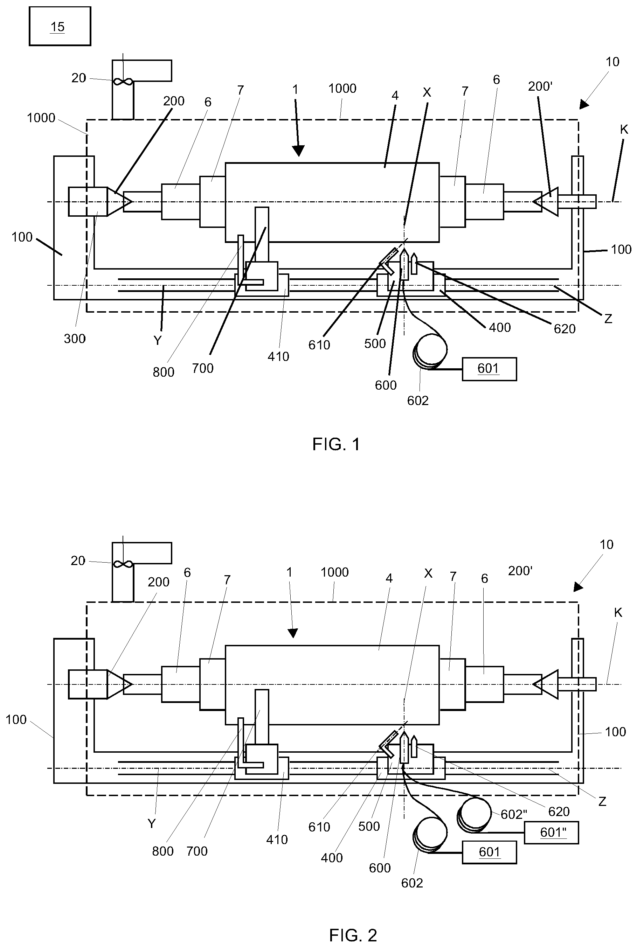

The cylindrical body 1, or laminating cylinder 1, shown schematically in Figures 1 to 4, may have a length of the side working surface between 500 mm and 2500 mm, a diameter between 50 mm and 1500 mm. The cylindrical body may be made of metallic material, such as steel or cast iron.

Cylinder 1 has a lateral surface 4 extending along an axis of rotation K: lateral surface 4 defines the portion of the cylindrical body that is operational during the rolling stages. In other words, the lateral surface 4 defines the portion of the cylindrical body intended for laminating process.

The cylindrical body, during one of its grinding steps or external surface processing, is arranged at a work station defined by a support structure 100 configured to rotationally support the cylindrical body 1 around the rotation axis K.

The cylindrical body 1, at the work station 100, is supported by means of supports 200 that allow its rotation about the axis of rotation K of the cylinder 1. In one embodiment, shown in Figure 1, the apparatus includes a first and a second support 200, 200' to define a tip and tailstock system, to axially support the cylinder being machined. Specifically, the first and a second support 200, 200' are axially aligned along a direction coincident with the axis of rotation K of the cylindrical body when the latter is housed in the work station 100.

In an alternative embodiment, the cylinder is supported on the necks 6, defining areas of the cylinder, usually with a smaller diameter than the lateral surface 4, where the bearings are mounted to insert the cylinder into the rolling mill: in this case, cylinder support may be via plain bearings.

In a further alternative embodiment, the cylinder is supported on shoulders 7 interposed axially between the lateral surface 4 and necks 6: specifically, shoulders 7 have intermediate diameters between the diameter of the necks and the diameter of the lateral surface 4 of the cylindrical body, where necks 6 have the smallest diameter.

In other words, and in accordance with the embodiments previously described, workstation 100 is configured to support the cylindrical body and to enable, or determine, its rotation about its axis of rotation K: in particular, workstation 100 defines an operating location suitable to accommodate cylindrical body 1.

The apparatus may also include a motor 300, shown in Figure 1, operatively connected to the cylindrical body and configured to place the cylindrical body 1 in rotation around the axis of rotation K during a lateral surface grinding step 4.

The apparatus also includes at least one 600, 600" laser emitter cooperating with the workstation 100 and configured to emit at least one laser beam in the direction of the apparatus operating location 10 in which the cylindrical body 1 is housed.

Specifically, the 600, 600" laser emitter is connected, via an optical fiber 602, 602", to a laser source 601, 601" configured to generate the laser beam and direct it, via the optical fiber, to the laser emitter.

In an alternative embodiment, not shown in the figures, the 600, 600" laser emitter is connected to the 601, 601" laser source through a system of reflective mirrors, suitable for carrying the beam, by successive reflections, from the laser source to the laser emitter. In this case, the optical fiber is then replaced by an air path of the laser beam, protected within appropriate passages. Specifically, the apparatus comprises the reflective mirror system in an embodiment in which the laser source is configured to emit a pulsed laser beam having durations of less than 100 fs, specifically between 0.1 fs and 100 fs, specifically between 1 fs and 50 fs. The Applicant points out that the transmission of the pulsed laser beam, when having pulse durations in the range of fs, benefits from the presence of reflective mirrors in place of a fiber optic cable. As will become clear later in the description, the mirror system may thus be used during the semi-finishing stages.

Laser sources may be mainly solid-state (e.g., fiber, disk, Nd:YAG, Yb:YAG, Nd:YVO$_4$, diode), with continuous or pulsed laser beam emission. The type of laser source may be defined according to the type of grinding to be performed on the cylindrical body 1.

Pulsed laser beams whose duration is in the order of magnitude of ns (nanoseconds), ps (picoseconds), fs (femtoseconds) may be used for ablation-based processing. Laser pulses may be emitted at frequencies between 1 kHz and 50 MHz, and wavelengths close to infrared (e.g., wavelengths of about 1 μm) or visible light (e.g., wavelengths of about 0.5 μm) or close to ultraviolet light (wavelengths of about 0.3 μm). The average power of the laser beam may be moderate, typically greater than 1W, e.g. 50-200 W: in contrast, the peak power of the laser beam pulses may be very high, typically greater than 10 kW and up to values greater than 1 MW).

A laser with continuous or modulated emission with long pulses (μs to ms or more) may be used to carry out polishing processes on the entire cylinder or localized (crack repair).

A pulsed laser may also be used for cleaning processes (laser cleaning) to remove oxides, debris, and impurities locally or on the entire cylinder.

Details of the control parameters used to perform laminating cylinder grinding are detailed later in the description.

All processes may be coupled to beam shaping systems with oscillating beams or formed for large area processing through dynamic systems.

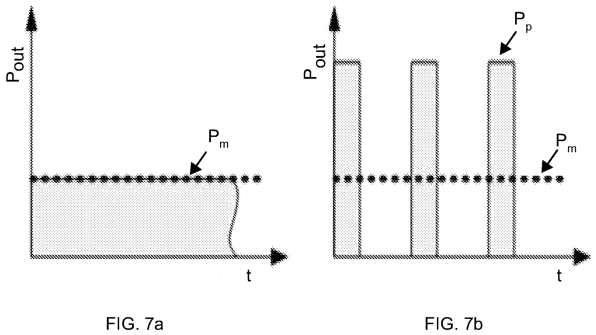

Figure 7a shows the Pout output power of a continuous laser beam, while Figure 7b shows the output power of a pulsed laser beam. In particular, the dashed line defines an average power of the laser beam: in the case of a continuous laser beam, this dashed line corresponds to a constant power of the laser beam. In the case shown in Figure 7b, the laser beam is emitted in pulses defining a peak power $P_p$, and an average power $P_m$, in which the peak power is greater than the average power. For the same average power, the continuous laser emits the average power constantly, while the pulsed laser emits a series of short pulses that, averaged over time, define an average power equivalent to that of a continuous laser. However, the present invention shows that a high peak power, compared to the average power, is particularly suitable for causing vaporization/ablation of the metallic material of the cylindrical body. For the same total energy and average power emitted by the laser, a continuous laser beam and a pulsed laser beam produce different results. A continuous laser beam or one having pulses of very long duration will tend to locally melt the material, and for this reason it is considered more suitable for finishing processing: on the contrary, a short-pulsed laser beam, due to high-power peaks, will tend to sublimate the material, and for this reason it is considered more suitable for removal/roughing/semi-finishing operations.

The amount of material removed is related to the peak power; consequently, at the same average power, the material removed increases as the pulse duration decreases.

The laser emitter 600, 600" is arranged alongside the operational seat housing the cylindrical body and is movable at least along a main axis Z substantially parallel to the axis of rotation K of the cylindrical body 1. When the cylindrical body 1 is housed in the operative location, the laser emitter is thus configured to move substantially parallel to the lateral surface 4 of the cylindrical body 1.

The apparatus may comprise a carriage 400 and a respective rail, in which the carriage 400 is movable along the main axis Z on the rail: the laser emitter may be carried and tethered to that carriage 400 to move along the main axis Z, as shown in Figure 1.

The apparatus may also include a sled 500 carried by, and constrained to, the carriage 400 and movable along a direction transverse to the main axis Z. In particular, the sled 500 may carry the laser emitter 600, 600" to allow it to move closer to and further away from the lateral surface 4 of the cylindrical body. Such transverse movement to the cylindrical body makes it possible to vary the position of the focus point of the laser beam emitted by the laser emitter with respect to the surface of the cylinder, to follow the profile of the surface to be processed, and to adapt the positioning of the laser emitter 600, 600" to cylindrical bodies of various diameters.

Movement of the carriage 400 and the slide 500 may preferably be by linear electric actuators or motors or other types of actuators, such as motors and ball screws with high precision in terms of displacement and high responsiveness to commands imposed by the control system.

As previously discussed in the state of the art section, the lateral surface of the cylindrical body tends to wear during the rolling stages, such as during the rolling of semi-finished metal products, e.g., metal strips: this results in the lateral surface of the cylindrical body becoming cracked, deformed, or work hardened, such that the lateral surface of the cylindrical body needs to be ground.

In this regard, the apparatus includes at least one profile detector 700, shown in Figures 1-4, which is configured to detect a profile of the lateral surface of the cylindrical body: in other words, such a profile detector 700 is configured to detect defects in the surface of the cylindrical body, so as to determine the points at which it is necessary to act and the manner in which to act with the laser beam. The profile detected by the detector 700 is called the detected surface profile DSP.

The profile detector 700 is movable at least along a detection axis Y substantially parallel to the axis of rotation K of the cylindrical body 1, to detect the profile along the entire length of the lateral surface of the cylindrical body 1. The profile detector 700 may comprise a gauge including one or more movable arms configured to contact, by means of a tip mounted at the end of each of the movable arms, the lateral surface 4 of the cylindrical body 1. Such arms define probes that, as they move according to changes in the profile of the lateral surface 4 of the cylindrical body, describe that profile. Alternatively, the profile detector 700 may include a noncontact distance detector configured to measure an interposed distance with the lateral surface of the cylindrical body 1: in particular, the noncontact distance detector may include an optical detector, such as a laser, or a time-of-flight detector.

Specifically, the profile detector is capable of detecting an elevation change in the lateral surface 4 resulting from a change in the diameter of the cylindrical body.

In more detail, the profile detector 700 is configured to detect a representative parameter of the profile of cylindrical body 1 comprising at least one of a diameter of cylindrical body 1, a variation in diameter of cylindrical body 1, or an interposed distance between the detector and the profile of the lateral surface of cylindrical body 1: this representative parameter varies according to the conditions of the outer profile of cylindrical body 1.

It should also be noted that the representative parameter of the outer profile may vary as a function of the angular position of the cylindrical body 1 and the position of the profile detector 700 along the Detection axis Y. In particular, the surface profile of the cylindrical body includes an altimetric parameter that varies as a function of the angular position of the cylindrical body 1, and/or a linear position along the detection axis Y.

Advantageously, the profile detector 700 may be complemented by an auxiliary defect detector 800 suitable for detecting surface defects on the lateral surface of the cylindrical body. Such auxiliary defect detector 800 may include an eddy current inductor and/or ultrasonic emitter, suitable for determining the location, shape, and size (including depth) of localized surface defects, such as cracks, dents, or the like.

Advantageously, there may also be a roughness meter, for measuring the roughness of the cylinder surface; such a roughness meter may be of the contact touch probe type, or *contactless.*

The apparatus may include an auxiliary carriage 410 and a respective rail, in which the auxiliary carriage 410 is movable along the Detection axis Y along the rail: the profile detector 700, and optionally, if present, also the auxiliary defect detector 800 and/or the roughness tester, may be carried by and constrained to such auxiliary carriage 410 to move along the main Y axis, as shown in Figure 1.

In an embodiment, for example shown in the attached figures 1 to 4, the Detection axis Y may be coincident with the main axis Z of the 600 laser emitter.

In addition, the apparatus 10 may include a distance meter 620 configured to detect an interposed distance between the laser emitter 600, 600" and the surface of the cylinder being processed: the distance between the laser emitter and the lateral surface 4 of the cylindrical body 1 influences the effectiveness of the laser to remove metallic material, as the focal position of the laser relative to the cylinder surface varies with this distance. If the distance between the laser emitter and the lateral surface 4 of the cylindrical body 1 is found to be outside a predefined range, the laser may be moved closer to or further away from the cylindrical body manually or by an actuator, such as an electric actuator. Additionally, a control unit may be configured to detect the distance interposed between the laser and the cylindrical body, compare that distance with a target distance, and, depending on that comparison, command an actuator to move the laser emitter closer or further away. Such distance correction may be performed before starting a cylindrical body grinding procedure, or it may also be performed during grinding operations so as to update the position of the laser emitter as the diameter of the cylindrical body changes.

The apparatus may also include a gas nozzle 610 adjacent to the laser emitter 600 and configured to generate a gas flow in the direction of the portion of the cylindrical body 1 on which the laser beam insists. Advantageously, the gas is a nonoxidizing gas, such as an inert gas, such as nitrogen, helium, or argon. Alternatively, reactive gases, such as oxygen, may be used to achieve chemical changes on the surface affected by the laser beam.

The gas nozzle is configured to emit said gas during an apparatus operating condition, specifically when the laser emitter emits the laser beam on the cylindrical body 1.

The apparatus may further comprise a cover structure 1000 including side walls, and an upper wall to define a containment volume for the work area and cylindrical body 1. The cover structure 1000 defines a safety barrier configured to contain, within the containment volume, an operational laser beam, e.g., class 4. It should be noted that the laser beam, if not contained, may define a substantive risk to human health.

The cover structure 1000 also includes a vacuum system 20 configured to suck up the material removed during cylindrical body grinding. In fact, laser grinding results in the vaporization of the metal material, generating very fine metal dust that is potentially harmful to human health. The suction system 20 is therefore configured to determine a flow of air suitable for sucking up such dust during a grinding condition. The suction system may include one or more filters suitable for retaining such dust. In addition, the presence of the gas nozzle 610 would, if the apparatus were not provided with the cover structure, contribute to the spread of metal dust, raising the level of risk to human health. The preceding description includes the main components and main features of apparatus 10. However, apparatus 10 may be set up in accordance with various different embodiments of each other, each of which may be in accordance with the present invention and the present inventive concept as defined by the appended claims.

Figure 1 shows an initial configuration in which the apparatus comprises a single laser source 601 connected via the respective fiber optic cable 602, or via an appropriate reflective mirror system, not shown in the figure, to a single laser emitter 600. Furthermore, in such an embodiment, the laser emitter 600 and the profile detector 700 are independently movable along the main axis Z, as they are carried by the carriage 400 and the auxiliary carriage 410, respectively. In accordance with the first configuration, the laser emitter is independently movable with respect to the profile detector 700: this allows the laser beam to operate on the lateral surface 4 of the cylindrical body, regardless of the position assumed by the profile detector along the main axis Z.

Figure 2 shows a second configuration in which the apparatus comprises a first laser source 601 and a second laser source 601", both of which are connected by respective fiber optic cables 602, 602", or by respective reflective mirror systems, not shown in the figure, to the same laser emitter 600. Preferably, the second laser source 601" is of a different type than the first laser source 601: thus, by activating either the first or the second source, a wider range of processing may be performed, increasing the flexibility of the apparatus. For example, the first laser source may be configured to perform coarse material removal machining, while the second laser source may be configured to perform surface finishing machining. In this configuration, it is generally possible to change the type of processing during several passes of the carriage 400: however, it is not possible to perform two different types of processing at the same time, as there is a single laser 600 emitter.

Furthermore, in the second configuration, similar to the first configuration, the laser emitter 600 and the profile detector 700 are independently movable along the main axis Z, as they are carried by the carriage 400 and the auxiliary carriage 410, respectively. In accordance with the second configuration, the laser emitter is independently movable with respect to the profile detector 700: this allows the laser beam to operate on the lateral surface 4 of the cylindrical body, regardless of the position assumed by the profile detector along the main axis Z.

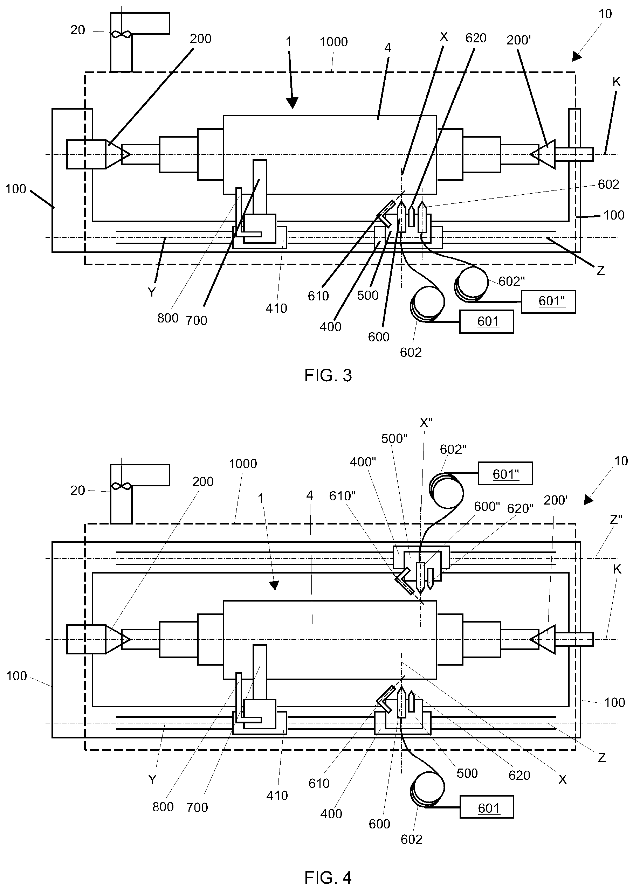

Figure 3 shows a third configuration in which apparatus 10 includes:

- a first laser source 601 connected by a respective fiber optic cable 602 (or by a respective reflective mirror system, not shown in the figure) to a first laser emitter 600, and
- a second laser source 601" connected by a respective fiber optic cable 602" (or by a respective reflective mirror system, not shown in the figure) to a second laser emitter 600" distinct from the first laser emitter 600.

In particular, note that the first laser emitter and the second laser emitter 600, 600" are carried by a common carriage 400 moving along the main axis Z, and are offset from each other along the main axis Z, such that the laser beam of the first laser emitter 600 engages a different portion of the cylindrical body 1 than the laser beam of the second laser emitter 600". For example, the first and second laser emitters may be parallel and spaced apart, as shown in Figure 3, and bound to the same common carriage 400.

The second laser source 601" may be of a different type than the first laser source 601: thus, by activating either the first or the second laser source, a wider range of processing may be performed, increasing the flexibility of the apparatus 10. For example, the first laser source may be configured to perform coarse material removal machining, while the second laser source may be configured to perform surface finishing machining. In this third configuration, unlike the second, it is therefore possible to perform two different types of processing in the course of a single pass of the laser beam, thereby reducing the time required for processing.

Alternatively, the first and second laser sources may be of the same type and be directed to different areas of the cylindrical body, as shown in Figure 3: thus, two similar processes may be carried out in the course of a single pass of the laser beam, consequently reducing the time required for processing.

Furthermore, in the third configuration, similar to the first and second configurations, the first and second laser emitters 600, 600" are movable along the main axis Z independently of the profile detector 700, as they are carried by the carriage 400 and auxiliary carriage 410, respectively. This allows two laser beams to operate on the lateral surface 4 of the cylindrical body, regardless of the position taken by the profile detector along the main axis Z. However, the first and second laser emitter 600, 600" are constrained to each other, being mounted on the same common carriage 400.

Figure 4 shows a fourth configuration in which apparatus 10 includes:

- a first laser source 601 connected by a respective fiber optic cable 602 (or by a respective reflective mirror system, not shown in the figure) to a first laser emitter 600, and
- a second laser source 601" connected by a respective fiber optic cable 602" (or by a respective reflective mirror system, not shown in the figure) to a second laser emitter 600" distinct from the first laser emitter 600.

In particular, note that in accordance with the fourth configuration, the first laser emitter 600 is carried by a first carriage 400, while the second laser emitter 600" is carried by a second carriage 400" distinct and separate from the first carriage 400. The first carriage 400 is movable along the main axis Z, while the second carriage 400" is movable along an auxiliary axis Z" parallel to the axis of rotation K of the cylindrical body 1 and parallel to the main axis Z of the first carriage.

In accordance with the fourth configuration, the laser beam of the first 600 emitter engages a different portion of the cylindrical body 1 than a portion engaged by the laser beam of the second 600 emitter." For example, the first and second laser emitters may be opposite to each other or angularly offset from the axis of rotation K. In the fourth configuration, the first laser emitter 600 is movable along the main axis Z independently of a movement of the second laser emitter 600" along the auxiliary axis Z".

On the auxiliary carriage 400" there is an auxiliary slide 500" movable along an axis X" transverse or perpendicular to the cylindrical body. The second laser emitter 600" is solidly bound to the auxiliary slide 500", so that it too is movable in approach and away with respect to the cylindrical body 1.

In accordance with the fourth configuration, the first laser source 601 may be the same and set identically to the second laser source 600": thus, the first and second emitters may perform the same type of processing on the cylindrical body simultaneously and at different portions of the lateral surface 4. Alternatively, but in accordance with the fourth configuration, the first laser source 601 may be different or be set differently than the second laser source 600": for example, the first laser source may emit a laser beam having a control parameter, such as a peak or average power, or a pulse duration, different than the laser beam emitted by the second laser source. In this way, the first and second emitters may perform different types of processing simultaneously.

Similar to the above, the apparatus in accordance with the fourth configuration includes an auxiliary nozzle 610" for insufflation of gas in the direction of the laser beam impact zone on the lateral surface of the cylindrical body. Finally, there is an auxiliary distance meter 620" configured to detect an interposed distance between the second laser emitter 600" and the surface of the cylinder being processed.

With one piece of apparatus in accordance with the fourth configuration, it is possible to carry out two laser machining operations, for example, of different types, requiring two different types of lasers, by optimizing the speed of the laser moved along the cylinder surface. In fact, in general, the 400 and 400" carriages are independent of each other and may move at different speeds along the main axis Z and the auxiliary axis Z", respectively. The control unit is then configured to move the first and second 600, 600" laser emitter independently in order to reduce processing time.

In accordance with the above description, the apparatus 10 may include an oscillation system configured to determine a spatial oscillation of the direction of the laser beam 12 emitted by the laser emitter 600, 600" at an oscillation frequency. The oscillation frequency may be between 10 Hz and 20,000 Hz, more particularly between 100 Hz and 10,000 Hz, more particularly between 200 Hz and 2,000 Hz, more particularly between 200 Hz and 2,000 Hz.

The oscillation system is then configured to define an apparent spatial shape of the laser beam 12: for example, the apparent spatial shape of the laser beam, i.e., the trajectory of its oscillation, may be, as a consequence of said oscillation, elongated rectilinear, circular, elliptical, ovoid, or rectangular. The oscillation of the laser beam may be determined by causing one or more lenses or mirrors incident with the laser beam to oscillate: the lenses and/or mirrors may be moved by piezoelectric actuators. Alternatively, the oscillation system may include deformable mirrors.

Sufficiently high oscillation frequencies of the laser beam, e.g., in the range of hundreds of Hz, allow for an apparent zone of action of the laser beam. In this way the material is processed with an apparent shape of the laser beam, e.g., similar to that of the scan trajectory.

The oscillation system may be configured to vary the direction of the laser beam along a single axis, consequently determining a laser beam having a linear apparent shape. Alternatively, the oscillation system may be configured to vary the direction of the laser beam along two axes, allowing a laser beam having a two-dimensional apparent shape to be defined. In this case, the apparent shape of the laser beam may be circular, elliptical, triangular, or rectangular.

The oscillation frequency may be fixed during the restoration procedure 2000, for example, during the entire removal procedure 2002.

Alternatively, control unit 15 of apparatus 10 may be configured to vary the oscillation frequency during the removal procedure 2002, for example, according to the speed, rotational or tangential, of cylindrical body 1. In particular, control unit 15 may be configured to increase the oscillation frequency as the speed of the cylindrical body increases. In addition, control unit 15 may be configured to decrease the oscillation frequency as the speed of the cylindrical body decreases.

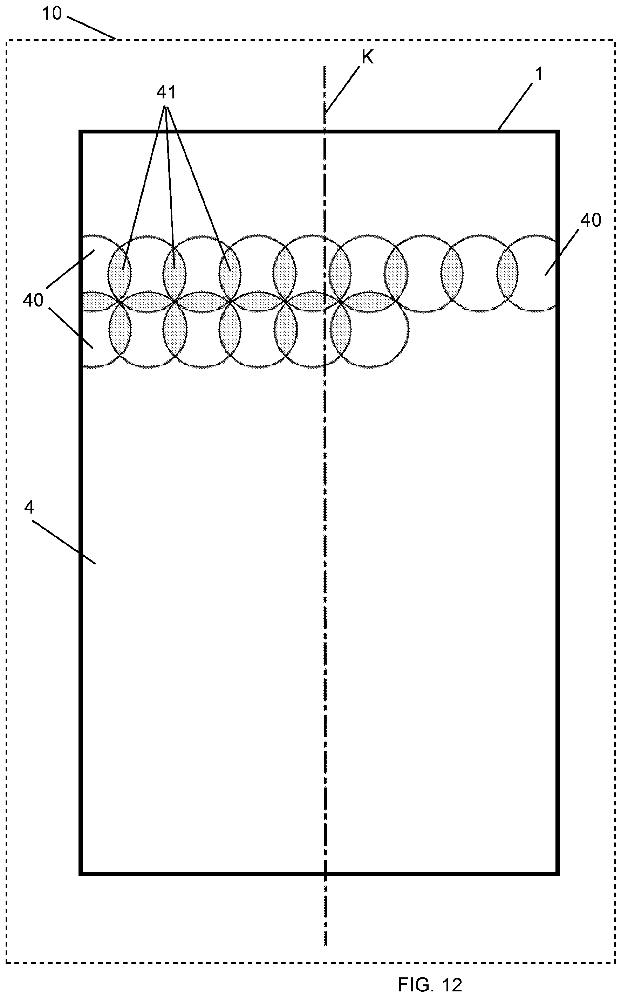

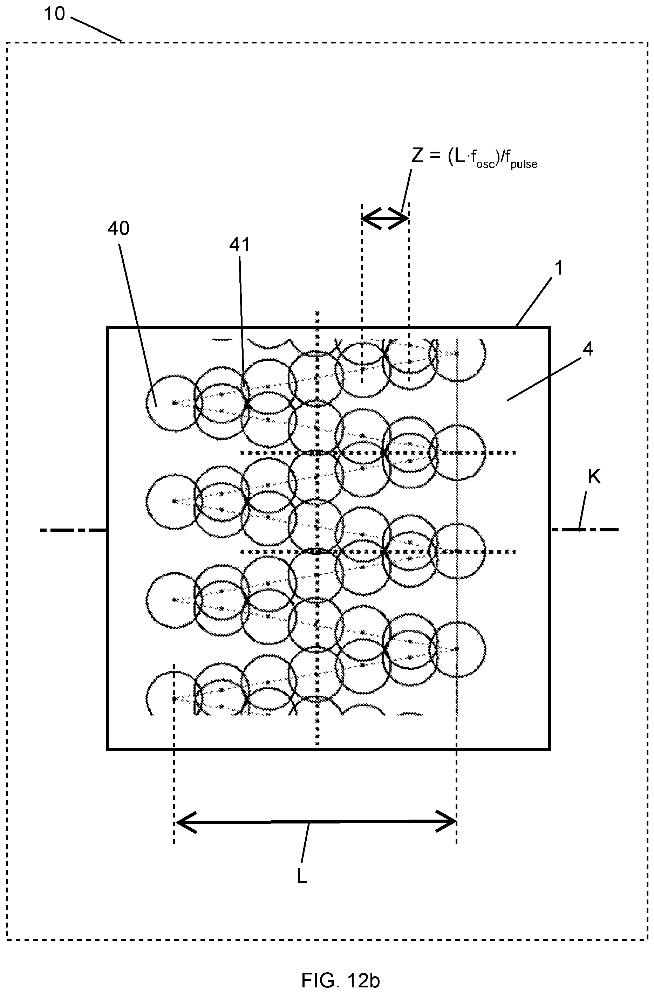

Such an oscillation system may result, during an operating condition of the apparatus, in a translation of the laser beam at the lateral surface 4 of the cylindrical body 1 between 0.05 mm and 5 mm, more specifically between 0.1 mm and 2 mm. For example, the spatial oscillation of the laser beam determined by the oscillation system defines a movement of the laser beam along a predefined trajectory that may include at least one among a circular trajectory, a straight trajectory, a curved trajectory, or an elliptical trajectory. For example, the oscillation system may be configured to move the laser beam along a trajectory essentially parallel to the axis of rotation of the cylindrical body, as shown in Figure 12b.

The oscillation system may be combined with either a constant-emission laser beam, such as a time-constant laser beam, or a pulsed-emitted laser beam.

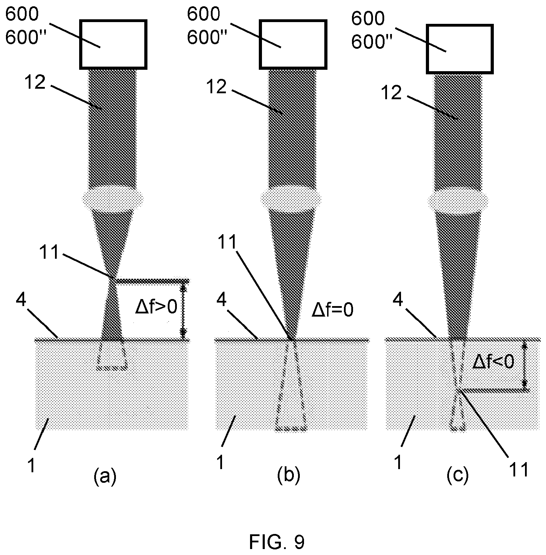

In an embodiment, the 600, 600" laser emitter may be configured to direct the laser beam toward a focus point 11, as shown in Figures 9a, 9b and 9c. In other words, the 600, 600" laser emitter may converge the beams constituting the laser beam substantially toward a single point defined by said focus point 11. The power density of the laser beam, that is, the normalized power per unit area, is greatest at the focus point, and decreases as the distance from focus point 11 increases. In fact, the laser beam condenses its entire power at focus point 11.

The focus point thus defines a minimum spatial dimension, specifically a minimum cross-sectional dimension, of the laser beam. In contrast, the surface cross-sectional extent of the laser beam increases as the distance from focus point 11 increases: outside of focus point 11, the laser beam power is in fact distributed over a gradually increasing surface area.

The '600, 600" laser emitter is configured to define the focus point 11 at a blurring distance $\Delta f$ relative to a reference plane defined, during an apparatus operating condition, by the lateral surface 4 of the cylindrical body 1. The focus point and the corresponding blurring distance $\Delta f$ are schematically depicted in Figures 9a, 9b and 9c. Note that when the focus point 11 lies on the lateral surface 4, the blurring distance $\Delta f$ is zero, as shown in Figure 9b: on the contrary, when the focus point 11 does not lie on the lateral surface 4, the blurring distance $\Delta f$ has a non-zero value. In more detail, and according to Figures 9a and 9c, respectively, a blur distance $Af > 0$ indicates a focus point outside the cylindrical body 1, while a blur distance $Af < 0$ indicates a focus point inside the cylindrical body 1. In other words, a focus point $Af > 0$ is interposed between the 600, 600" laser emitter and the lateral surface 4 of the cylindrical body. In contrast, a focus point $Af < 0$ is interposed between the lateral surface 4 of the cylindrical body 1 the axis of rotation K of the cylindrical body.

During the removal procedure 2002, control unit 15 may be configured to command the laser emitter to define a blur distance $\Delta f$ between +2 and -2 mm, more particularly between +1 mm and -1 mm, even more particularly between +0.5 mm and -0.5 mm. In more detail, the blurring distance $\Delta f$ is between 0.01 mm and 2 mm, more particularly between 0.1 mm and 1 mm, more particularly between 0.1 mm and 0.5 mm.

As previously described, the control unit 15 may be configured to command, during the removal procedure 2002, the laser emitter 600, 600" to emit a pulsed laser beam 12: these laser pulses are apt to remove material from the cylindrical body 1 to enable grinding of the cylindrical body 1, where specifically the cylindrical body 1 is a rolling cylinder. In such a configuration, the removal procedure 2002 includes:

- moving 2002a at least one between the cylindrical body 1 and the laser emitter 600, 600", and
- commanding the laser emitter 600, 600" to emit 2002b the pulsed laser beam toward the operating site of the workstation: specifically, the laser pulses are directed toward the lateral surface 4 of the cylindrical body 1.

In accordance with a preferred embodiment, the step of moving at least one between the cylindrical body 1 and the laser emitter 600, 600" includes placing the cylindrical body 1 in rotation about its axis of rotation K. Alternatively, the apparatus may provide that the cylindrical body 1 is fixed and the laser emitter is movable around the cylindrical body 1.

The laser beam pulses are temporally staggered with each other to define a laser pulse frequency: specifically, the frequency of laser pulses may be between 10 kHz and 10000 kHz, more specifically between 10 kHz and 1500 kHz.

Each laser pulse directed toward the lateral surface 4 of the cylindrical body 1 is configured to define, on the lateral surface 4 of the cylindrical body 1 during the operating condition of the apparatus, and in particular during the removal procedure 2002, a respective laser footprint 40. The laser footprint may define an area, and its boundaries, of the lateral surface 4 of the cylindrical body 1 of material removal from the cylindrical body: in other words, a laser pulse 10 removes metallic material from the lateral surface 4 of the cylindrical body substantially at said laser footprint 40, defining a crater having a depth relative to the lateral surface 4 of the cylindrical body.

Laser footprint 40 may have a shape in the group between circular, elongated circular, elliptical, and curvilinear having a convex contour. The shape of a laser footprint may vary as a function of a duration of the laser beam pulse defining the laser footprint, an energy of the laser beam pulse, a rotation speed of the cylindrical body around the rotation axis K during the emission of the laser pulse, or a shape of the laser beam.

The laser imprint may have a surface extent between 70 $\mu m^2$ and 20,000 $\mu m^2$. This surface extent of the laser beam 12 may be modified by commanding the laser emitter to change the focus point by moving the focus point away from or closer to the lateral surface 4 of the cylindrical body.

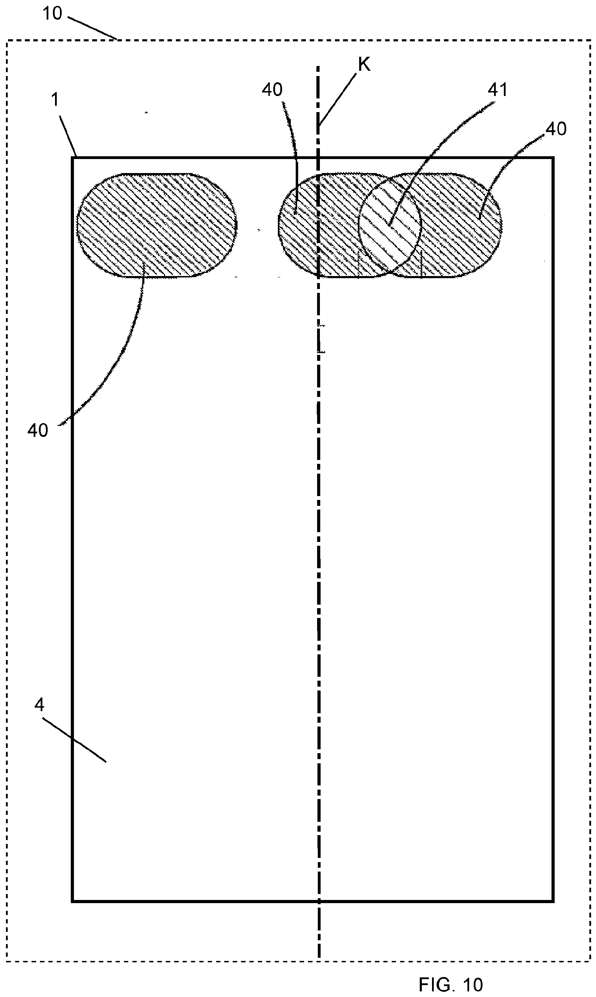

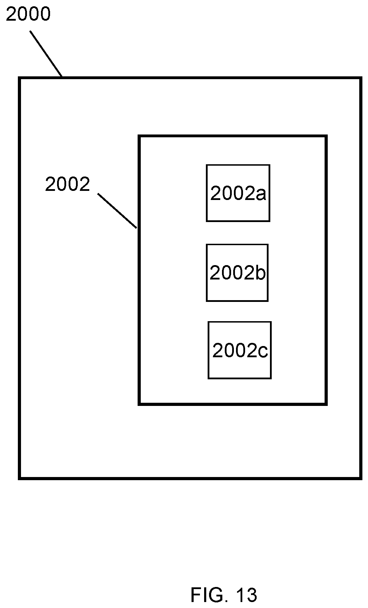

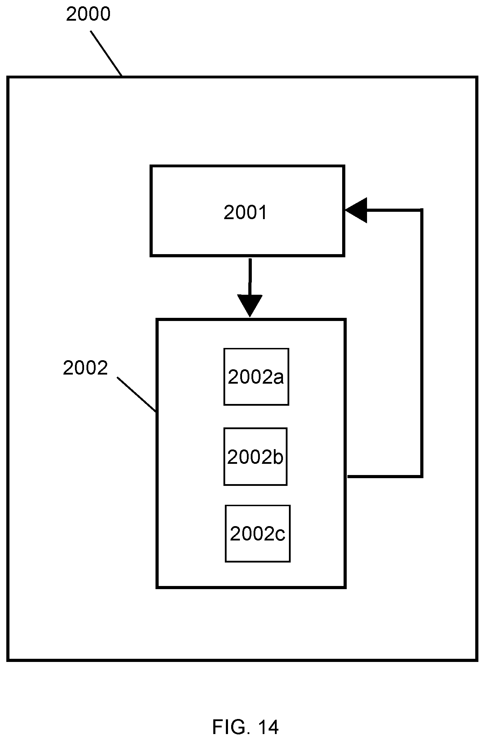

In accordance with an embodiment shown in Figures 10-12 and shown in terms of method steps in Figures 13 and 14, laser pulses define laser footprints 40 at least in partial overlap with each other by forming respective overlapping portions 41 between laser footprints 40. Each overlapping portion 41 preferably extends over a surface extent of between 10 % and 95 % of a surface extent of the laser footprint 40, more preferably between 20 % and 75 %. In one configuration, the removal procedure 2002 may include defining portions of the overlay having surface extent between 50 % and 75 % of a surface extent of the laser footprint 40. Alternatively, the removal procedure 2002 may include defining overlapping portions having surface extent between 20 % and 50 % of a surface extent of the laser footprint 40. In a specific embodiment, the removal procedure 2002 may include defining portions of the overlap having surface extent substantially equal to 50% of a surface extent of the laser footprint 40. In fact, it should be noted that since the cylindrical body is rotating and the laser pulses are temporally staggered with each other, successive laser footprints of each other will engage portions of the lateral surface 4 of the cylindrical body 1 that are distinct from each other, as shown schematically in Figures 10-12, and partially overlapping with each other.

In more detail, the overlapping portions 41 are defined by the partial overlap of laser footprints 40 that are consecutive to each other, specifically immediately consecutive to each other. The term immediately consecutive to each other means that, given a first laser pulse and a second laser pulse that are temporally staggered by a time duration equal to the inverse of the laser pulse frequency, the second laser pulse generates a second laser footprint partially overlapping a first laser footprint generated by the first pulse.

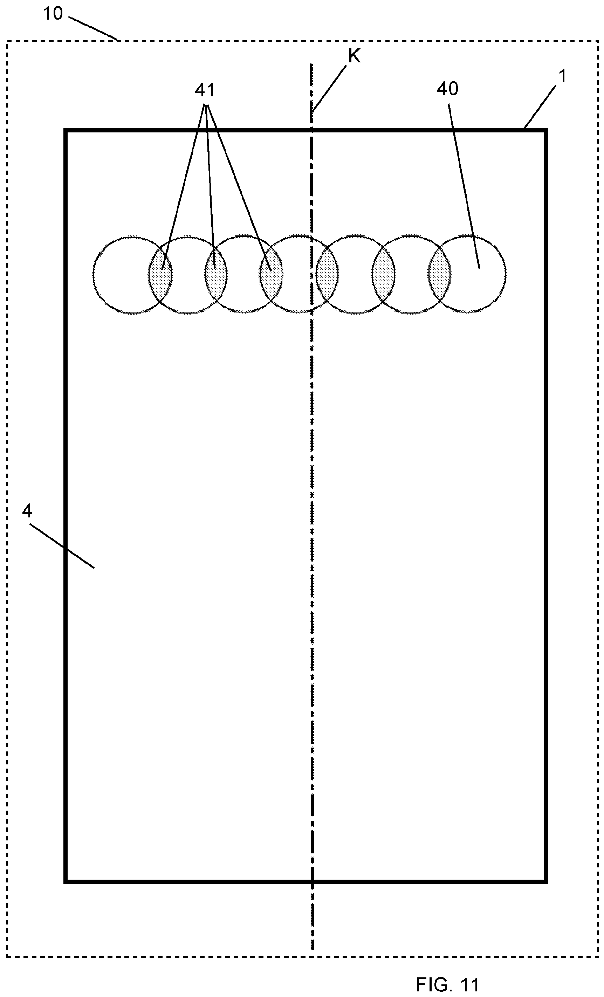

In an optional configuration, in which a third pulse, consecutive to and distinct from the first pulse and the second laser pulse, may generate a third laser imprint partially overlapping the second laser imprint but external to the first laser imprint: this configuration is shown, for illustrative purposes and not intended in a limiting sense of the present invention, in Figures 11 and 12.

Alternatively, the present invention may also provide that given the above-mentioned three laser pulses, i.e., the first pulse, the second pulse and the third pulse, the third laser imprint generated by the third pulse may be partially superimposed on both the first laser imprint and the second laser imprint: such an embodiment having three laser imprints partially superimposed on each other is not shown in the attached figures only for obvious graphical representation problems.

At the same laser pulse frequency, the surface extent of each overlapping portion 41 is dependent on the relative speed between the laser beam and the cylinder surface, given in turn by the combination of the rotation speed of the cylindrical body 1, i.e., the rotation frequency of the cylindrical body, and, if present, the oscillation speed of the beam, i.e., the oscillation frequency. The rotation frequency of the cylindrical body is meant as the number of complete rotations around the rotation axis K per time unit, for example between 5 RPM and 50 RPM when in the presence of laser beam oscillation, or between 50 and 250 RPM when in the absence of laser beam oscillation. The oscillation frequency is meant as the number of complete oscillations in the unit of time accomplished by the oscillation system. Similarly, the oscillation frequency is meant as the number of complete oscillations in the unit of time accomplished by the laser beam. During the removal procedure 2002, the control unit 15 may be configured to command a speed or frequency of rotation of the cylindrical body 1, such as a rotation speed between 5 RPM and 250 RPM. Optionally, during the removal procedure 2002, control unit 15 may be configured to command a speed or frequency of oscillation of the laser beam, for example, an oscillation frequency between 10 Hz and 20,000 Hz, specifically between 100 Hz and 10,000 Hz, more specifically between 200 Hz and 21,000 Hz.

At the same frequency of laser pulses, as the relative speed between the laser beam and the cylinder surface increases, the surface extent of each portion of the overlap decreases. On the contrary, at the same frequency of laser pulses, as the relative speed between the laser beam and the cylinder surface decreases, the surface extent of each portion of the overlap increases 41.

The surface extent S of the overlapping portion 41 may be defined as a percentage, relative to a surface extent of the laser footprint 40, by the following formula:

$$S\% = \left(1 - \frac{Vr}{Ds \cdot f_{pulse}}\right) \cdot 100$$

Where:

- S% is the superficial extent of the overlapping portion 41 defined as a percentage compared with a superficial extent of the laser footprint 40;
- Vr is the relative velocity between the laser beam and the lateral surface 4 of the cylindrical body 1;
- Ds is the diameter, e.g. the average diameter, of the laser 40 footprint;
- $f_{pulse}$ is the frequency of laser pulses in particular expressed in Hz.

To generate consecutive overlapping portions between them, the frequency of laser pulses is preferably greater than the rotation frequency of the cylindrical body and, if any, the oscillation frequency of the beam: in particular, the frequency of the laser pulses may be at least "n" times greater than the rotation frequency of the cylindrical body 1, where n>100, specifically n>500, optionally n>1000, even more specifically n>3600; in addition, the frequency of the laser pulses may be at least "m" times greater than the oscillation frequency of the beam, where m>10, specifically m>50, optionally m>100, even more specifically m>360.

To resume, based on the above, the extent of the overlapping portion is closely related to the pulse frequency of the laser beam and the relative speed between the laser beam and the cylinder surface (given in turn by the combination of the rotational speed or a rotational frequency of the cylindrical body 1, and, if present, the oscillation speed or frequency of the laser beam). In one configuration, the control unit 15, depending on a desired surface extent of the overlapping portion, may be configured to:

- calculate and command the frequency of laser beam pulses, and

- calculate and command a relative velocity between the laser beam and the surface of the cylindrical body 1.

Specifically, control unit 15 may be configured to:

- receive as input or calculate a desired surface extent of the overlapping portion;
- depending on the desired surface extent of the overlapping portion 41, calculate:

  ○ the pulse frequency of the laser beam, and
  ○ the relative velocity between the laser beam and the surface of the cylindrical body,

- perform the removal procedure 2002 by setting said laser beam pulse frequency and said relative speed between the laser beam and the surface of the cylindrical body.

For example, the relative speed between the laser beam and the surface of the cylindrical body may be determined by the combination of the rotation speed of the cylindrical body around the rotation axis K and the oscillation frequency of the laser beam commanded by the oscillation system.

Control unit 15, during the removal procedure 2002, may also be configured to calculate a peak laser beam power and/or an average laser beam power depending on a desired surface extent of the overlapping portion. In more detail, control unit 15 may be configured to:

- receive as input a desired surface extent of the overlapping portion, and
- depending on the desired surface extent of the overlapping portion, calculate at least one of a peak power and/or average pulse power of the laser beam, a relative velocity between the laser beam and the surface of the cylindrical body, a frequency of the laser pulses.

For example, control unit 15 may be configured to receive as input the desired surface extent of the overlapping portion, and set a peak power of the laser beam, a relative speed between the laser beam and the surface of the cylindrical body, and the frequency of the laser pulses.

Alternatively, control unit 15 may be configured to:

- receive as input a peak pulse power from the beam, and
- according to that peak pulse power from the laser beam, calculate the surface extent of the overlapping portion;
- perform the restoration procedure 2000, specifically the removal procedure 2002, setting the surface extent of the overlapping portion 41.

In a further embodiment, control unit 15 may be configured to:

- receive as input a relative velocity between the laser beam and the surface of the cylindrical body, and
- optionally receive as input a laser pulse frequency;
- as a function of the relative velocity between the laser beam and the surface of the cylindrical body and optionally the frequency of the laser pulses, calculate the surface extent of the overlapping portion.

In a further embodiment, control unit 15 may be configured to:

- receive as input a peak power of the laser beam pulses,
- receive as input a relative velocity between the laser beam and the surface of the cylindrical body, and
- calculate, as a function of the peak power of the laser beam pulses and the relative velocity between the laser beam and the surface of the cylindrical body, a laser beam pulse frequency between 10 kHz and 10000 kHz to achieve a surface extent of the overlapping portion between 20 % and 90 %, optionally between 25 % and 75 %, of the surface extent of the laser footprint.

This description also points out that the percentage of overlap between two laser footprints influences the surface roughness of the cylinder body obtained at the end of the restoration procedure. In particular, very high values of the percentage of overlap between two successive laser footprints may induce damage to the cylinder surface, while an excessive reduction of the same percentage (or even a negative value of this percentage) may result in incomplete or coarse processing of the cylindrical body. The control unit 15 of the apparatus 10 of the present invention may be configured to calculate, as a function of a desired maximum surface roughness, a surface extent of the overlapping portion or a ratio of the surface extent of the overlapping portion to the surface extent of the laser footprint.

Once such a surface extent of the overlapping portion or such a ratio has been calculated, control unit 15 may calculate, to obtain said surface extent of the overlapping portion or such a ratio, at least one between a rotation speed of the cylindrical body, and a frequency of the laser pulses. For example, control unit 15 may calculate both the rotation speed of the cylindrical body and the frequency of laser pulses to obtain the calculated surface extent of the overlapping portion.

Additionally, control unit 15 may be configured to calculate, depending on the surface extent of the overlapping portion or such ratio previously calculated as a function of the desired roughness, at least one between a peak power of the laser beam pulses, and an average power of the laser beam pulses.

The maximum desired surface roughness may be between 0.05 $\mu$m and 3.0 $\mu$m.

The surface extent of the overlapping portion may be between 10 % and 95 % of the surface area of the laser footprint.

The peak power of the laser beam pulses may be between 5 kW and 1000 kW.

The rotation speed of the cylindrical body may be between 5 RPM and 250 RPM, optionally between 20 RPM and 100 RPM.

It should also be noted that, in accordance with an embodiment of the restoration procedure 2000 whose flowchart is shown in Figure 13, the restoration procedure 2000 of apparatus 10 may include the step of defining the overlapping portions 41 between at least two laser 40 footprints without the restoration procedure 2000 necessarily including the 2001 detection step.

Additionally, the extent of the overlapping portion 41 may be dependent on the oscillation frequency of the laser beam 12 determined by the oscillation system. Indeed, it should be noted that in order to obtain overlapping portions 41 between consecutive laser 40 footprints, the frequency of the laser pulses 12 must be related to the oscillation frequency of the laser beam and the surface extent of the laser footprints.

To obtain overlapping portions 41, the average laser beam displacement velocity $V_{osc}$ at the lateral surface 4 of the cylindrical body 1 must be less than the product of the pulse frequency $f_{imp}$ and a parameter D representative of a laser footprint size 40, in accordance with the following formula:

$$L \cdot f_{osc} < D \cdot f_{pulse}$$

where:

- $f_{osc}$ is the oscillation frequency of the laser beam that may be determined by the oscillation system, said oscillation frequency being specifically expressed in Hz;
- D is a representative parameter of the size of said laser 40 footprints, said representative parameter D being specifically a linear dimension e.g. expressed in mm;
- L is the amplitude of oscillation of the laser beam at the lateral surface 4 of the cylindrical body 1, said amplitude of oscillation of the laser beam being specifically expressed in mm, specifically where the amplitude of oscillation L is between 0.05 mm and 5 mm, more specifically between 0.1 mm and 2 mm;
- $f_{pulse}$ is the frequency of laser pulses, said laser pulse frequency being specifically expressed in Hz.

In the case where the laser footprint 40 has a circular shape, the parameter D corresponds to the diameter of the laser footprint.

Specifically, based on the above formula, control unit 15 may be configured to determine the oscillation frequency of the oscillation system according to the following formula to obtain overlapping portions 41:

$$f_{osc} < \frac{D}{T \cdot L}$$

where:

- $T = 1/f_{pulse}$ is the time interval between two laser pulses, said time interval being the inverse of the pulse frequency $f_{pulse}$ of the laser beam, for example said time interval being expressed in seconds.

For example, control unit 15 may be configured to vary the oscillation frequency according to the size of the single crater of material removed by a single laser pulse: the smaller the craters, the lower the oscillation frequency must necessarily be to obtain overlapping portions 41. In more detail, to obtain overlapping portions 41 between the various consecutive laser 40 footprints between them, the control unit 15 may be configured to determine the oscillation frequency of the oscillation system as a function of a size D of the laser 40 footprints, a frequency of the laser pulses, and an oscillation amplitude of the laser pulses. For example, control unit 15 is configured to decrease the oscillation frequency as the dimension D of laser footprints 40 decreases. Also, having fixed an oscillation frequency, control unit 15 may be configured to, in order to obtain overlapping portions 41, increase the size D of the laser footprints 40 as the oscillation amplitude of the laser beam increases. Similarly, in order to obtain overlapping portions 41, control unit 15 may be configured to, in order to obtain overlapping portions 41, increase the oscillation frequency as the size of the laser footprints 40 increases.

Note that the distance Z between a first laser footprint and a second laser footprint is therefore dependent on the pulse frequency, the oscillation frequency of the laser beam and the oscillation amplitude of the laser beam, as shown in Figure 12b. Specifically, the Z distance may be calculated by the following formula:

$$Z = \frac{L \cdot f_{osc}}{f_{pulse}} < D$$

where:

- $f_{osc}$ is the oscillation frequency of the laser beam that may be determined by the oscillation system, said oscillation frequency being specifically expressed in Hz;
- $f_{pulse}$ is the frequency of laser pulses, said laser pulse frequency being specifically expressed in Hz;
- L is the amplitude of oscillation of the laser beam at the lateral surface 4 of the cylindrical body 1, said amplitude of oscillation of the laser beam being specifically expressed in mm, specifically where the amplitude of oscillation L is between 0.05 mm and 5 mm, more specifically between 0.1 mm and 2 mm;
- D is the representative parameter of the size of said laser 40 footprints, said representative parameter D being specifically a linear dimension for example expressed in mm.

Figure 12b also shows an embodiment of apparatus 10 in which the oscillation system is configured to move the laser beam along an oscillation direction substantially parallel to the rotation axis K of the cylindrical body 1. The rotation of the cylindrical body during the removal procedure, combined with the movement of the laser beam along an oscillation direction substantially parallel to the axis of rotation K of the cylindrical body 1, results in the peculiar serpentine path, particularly the symmetric zigzag path, of the laser footprints on the lateral surface 4 of the cylindrical body 1. In particular, the zigzag path is defined as a broken line that forms a continuous series of angles: in fact, the zigzag path is a shape described by a line that is interrupted by continuing alternately in opposite directions at constant angles.

Restoration procedure 2000 of the cylindrical body 1

The present invention is also directed to a restoration procedure 2000 of the lateral surface 4 of the cylindrical body 1, performed by the previously described apparatus 10 by emitting a laser beam suitable for removing material from the lateral surface 4 of the cylindrical body. The steps, described below, of the restoration procedure may be controlled and synchronized with each other by the control unit 15 of the apparatus. Additionally, these steps define a relative method for restoring/rectifying the lateral surface of the cylindrical body by the action of a laser beam.

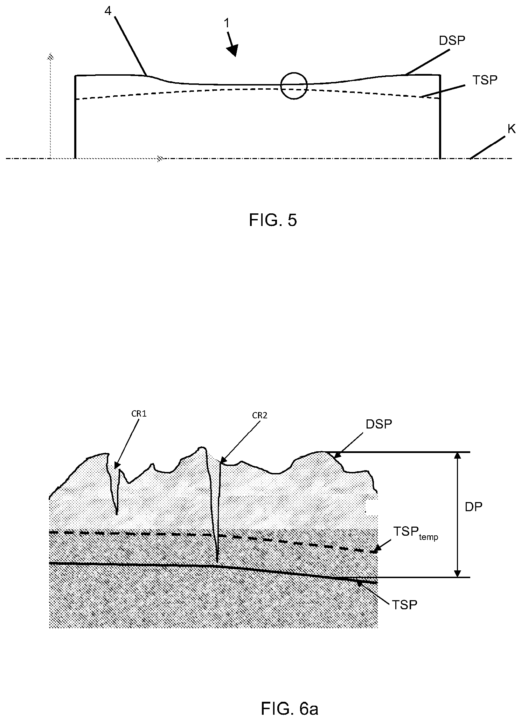

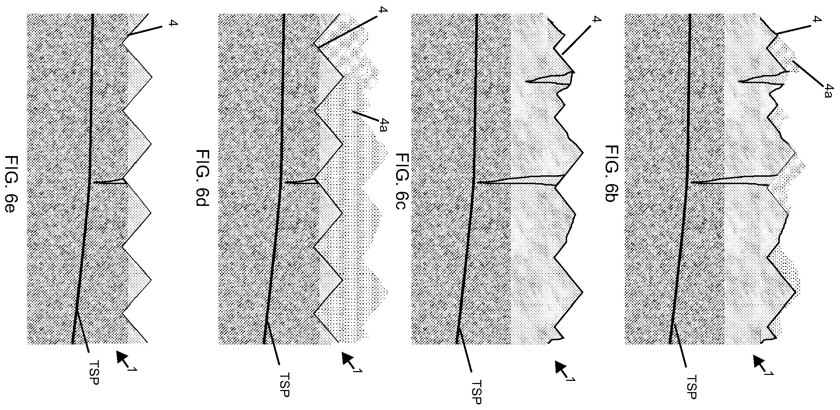

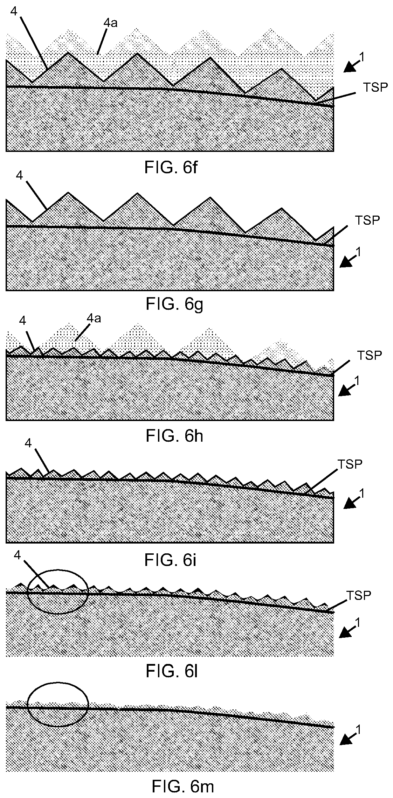

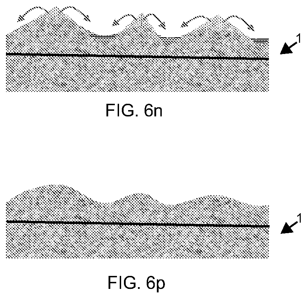

The restoration procedure includes a detection procedure 2001 including at least the step of detecting, by means of the profile detector 700, the detected surface profile DSP of the cylindrical body 1, in accordance with what is described in the previous section and as shown schematically in Figures 5 and 6. The detected surface profile DSP of cylindrical body 1 then defines the worn profile of the rolling cylinder that needs to be processed to be within the tolerances of the rolling mill.

The control unit may be configured to move the profile detector 700 along the Detection axis Y and simultaneously detect, along the detection axis Y, the surface profile DSP using the profile detector 700. The control unit may also be configured to associate the geometric feature of the detected surface profile DSP of cylindrical body 1 with a respective linear position along the detection axis Y, to define a surface profile map of the cylindrical body. The step of moving the profile detector 700 along the Detection axis Y thus allows the surface profile of the cylindrical body to be detected along a substantially straight line.

Optionally, the control unit is configured to move the cylindrical body 1 in rotation about the rotation axis K: for example, the control unit may drive an electric motor operatively connected to the cylindrical body to place the cylindrical body 1 in rotation, at a predefined angular speed. The control unit may then be configured to detect the DSP surface profile by means of the profile detector 700, the latter moved along the detection axis Y as the cylindrical body rotates.

The combination of motion of the profile detector 700 parallel to the axis of rotation of the cylindrical body, and the angular motion of the cylindrical body 1 allows the generation of a surface profile, dependent on the linear position of the profile detector 700. Thus, the surface profile is not affected by the trend of a single longitudinal portion of the lateral surface of the cylindrical body, but is averaged along the revolutions of the cylindrical body during profile acquisition. In other words, an average value is selected among all the points at different angular positions detected during a complete revolution of the cylinder and corresponding to an appropriate surround of the Y-coordinate, allowing for simultaneous measurement of roundness and eccentricity errors along the cylinder table.

The control unit may be configured to move the profile detector 700 along the Detection axis Y while the cylindrical body is fixed in an angular position, and then move the cylindrical body one step in rotation to define a new angular position and detect the profile along the Detection axis Y while the cylindrical body is fixed in the new angular position.

Similarly, it is possible for the control unit to be configured to perform the opposite procedure, i.e., moving the cylindrical body in rotation and simultaneously detecting the surface profile using the profile detector 700, and then moving the profile detector 700 one step along the detection axis Y to define a new linear position of the detector.

In an alternative embodiment, the control unit may be configured to first move the profile detector 700 along the detection axis Y while the cylindrical body is fixed at an angular position, and then move the cylindrical body in rotation at a predefined angular speed and simultaneously detect the surface profile by the profile detector 700 at predefined Y-axis positions, such as at the ends of the table and its middle part.

In an alternative embodiment, the control unit may command that the rotation of the cylindrical body and the linear movement of the profile detector 700 along the Y axis occur simultaneously: in this case, the control unit is then configured to associate each geometric feature of the DSP-detected surface profile of the cylindrical body 1 with a respective linear position of the profile detector 700 and optionally with a respective angular position of the cylindrical body 1.

The detection procedure also includes a step of comparing the detected DSP surface profile with a TSP target surface profile of the cylindrical body 1. The TSP target surface profile is a profile that the recovery procedure aims to obtain after grinding. In general terms, note that the TSP target surface profile defines an average diameter of cylindrical body 1 that is smaller than a respective average diameter of cylindrical body 1 defined by the Detected surface profile DSP. In other words, there is a thickness of material to be removed between the TSP target surface profile and the Detected surface profile DSP that the restoration procedure has to remove to allow the TSP target surface profile to emerge.

The control unit may be configured to calculate the TSP target surface profile, or it may be configured to receive the TSP target surface profile as input. In the case where the control unit is configured to calculate the TSP target surface profile, the control unit is configured to detect the initial surface profile, check for defects, cracks, or local surface damage, and define the TSP target surface profile at a depth, relative to the detected surface profile, greater than a maximum depth of a defect or crack present on the lateral surface. Figure 6a schematically illustrates this concept: depending on an initial minor defect CR1, the control unit is configured to define a temporary target surface profile $TSD_{temp}$, highlighted by the dashed line: the depth of the temporary target surface profile $TSD_{temp}$, allows sufficient material to be removed to eliminate the surface defect CR1. However, during a further detection step, the profile detector may detect a second defect CR2, deeper than the first defect CR1, and intersecting the temporary target surface profile TSD$_{temp}$: as a result, the temporary target surface profile TSD$_{temp}$ would not allow the second surface defect CR2 to be totally removed. The control unit is then configured to update the target profile and define a new target profile TSP placed at a depth, relative to the detected surface profile, greater than the maximum depth defined by the second defect CR2. In this way, the removal of the material to be removed interposed between the detected surface profile and the new target surface profile TSD also allows the defect CR2 to be completely removed.

In other words, the control unit is configured to define the target surface profile according to the detected surface profile such that if the target surface profile intersects the detected surface profile, the control unit is configured to reduce a diameter of the cylindrical body on which to define the target surface profile.

The target surface profile is considered final only after the profile detector and defect detector, if any, have completed the profile (and defect, if any) detection operations on the entire lateral surface 4 of the cylindrical body.

Similar to what has been described with respect to the detected surface profile DSP of the cylindrical body 1, the target surface profile TSP of the cylindrical body 1 comprises at least one geometric feature varying as a function of at least one between an angular position of the cylindrical body 1, and a linear position along the detection axis Y. The geometric feature of the target surface profile TSP includes at least one respective target altimetric parameter representative of a diameter of the cylindrical body 1 and/or a variation of said diameter of the cylindrical body 1 and/or a distance interposed, in an operating condition and subsequent to the removal procedure, between the lateral surface 4 of the cylindrical body 1 and the profile detector 700.

The comparison between the detected surface profile DSP and the target surface profile TSP, defines a differential parameter DP. Specifically, the differential parameter is defined by the comparison between the altimetric parameter of the detected surface profile DSP and the altimetric parameter of the target surface profile TSP, as shown schematically in Figures 5 and 6a. The differential profile parameter DP is representative of a difference or ratio between the detected surface profile DSP and the target surface profile TSP, as shown in Figure 6a. In other words, the DP differential parameter is representative of the amount of material to be removed interposed between the detected surface profile DSP and the TSP target surface profile.

The restoration procedure also includes a material removal procedure 2002 from the lateral surface 4 of the cylindrical body 1: specifically, the removal procedure includes at least the step of emitting a laser beam through the laser emitter 600, 600" toward the lateral surface 4 of the cylindrical body 1 to remove material from the surface until the difference between the detected surface profile DSP and the target surface profile TSP is within a predetermined tolerance.

The removal procedure is performed according to the comparison between the detected surface profile DSP and the target surface profile TSP, i.e., according to the differential parameter DP. Therefore, the removal procedure is apt to remove the material to be removed interposed between the target surface profile and the detected surface profile: note that the detected surface profile is a worn profile presenting substantially random variations: the differential parameter DP may therefore vary as a function of the angular position of the cylindrical body and/or the position of the profile detector: in other words, the portion of material to be removed varies as the position identified on the lateral surface 4 of the cylindrical body 1 varies.

The control unit, during the removal procedure, is then configured to modulate, depending on the differential parameter of the profile, at least one control parameter of the laser beam emitted by the laser emitter 600, 600": the control parameter may include an average laser beam power, a peak laser beam power, a duration of laser beam pulses, a duration of the intervals between laser beam pulses, a laser beam size, a distance between the 600, 600" laser emitter and the outer surface of the cylindrical body 1.

For example, as the value of the differential parameter increases, the control unit may be configured to increase one or more among the peak power of the laser beam, the average power of the laser beam, or the time duration of exposure of a portion of the lateral surface 4 to the laser beam. Additionally, as the value of the differential parameter increases, the control unit may be configured to reduce at least one among the angular velocity of the cylindrical body 1, the displacement velocity of the laser emitter 600, 600" along the main direction Z, and the pulse duration of the laser beam.

Conversely, as a value of the differential parameter decreases, the control unit may be configured to reduce at least one of the exposure time duration, the peak power of the laser beam, and the average power of the laser beam.

Additionally, as the value of the differential parameter decreases, the control unit may be configured to increase at least one of the cylindrical body angular velocity 1, the laser emitter 600, 600" displacement speed along the main direction Z, and the duration of the laser beam pulses.

Additionally, the laser beam control parameter may include a displacement speed of the laser emitter 600, 600" along the main direction Z during a laser beam emission toward the outer surface of the cylindrical body 1, an angular velocity of the cylindrical body 1 about its axis of rotation K during a laser beam emission toward the outer surface of the cylindrical body 1, a number of passes in which the laser beam insists on the same portion of the lateral surface 4 of the cylindrical body 1. Additionally, the control parameter of the laser beam may include an exposure time duration in which said laser beam insists on the same portion of the lateral surface 4 of the cylindrical body 1: note that the exposure time duration depends on the angular velocity of the cylindrical body 1 and the displacement velocity of the laser emitter 600, 600".

The laser beam control parameter may also include an energy parameter representative of an energy emitted by the laser beam at the same portion of the lateral surface 4 of the cylindrical body 1. The energy parameter may depend on a combination of at least two in the group between a control parameter of the laser emitter 600, 600", the displacement velocity of the laser emitter 600, 600" along the main axis Z, the angular velocity of the cylindrical body 1 about its axis of rotation K, the time duration of exposure, or the number of passes of the laser beam at the same portion of the lateral surface 4 of the cylindrical body. For example, the energy parameter may be calculated as a function of the peak power of the laser beam pulses, an exposure duration, and a frequency of the laser beam pulses. Alternatively, the energy parameter may be calculated as a function of the average power and exposure duration of the surface to the laser beam.

The laser beam emitted toward the lateral surface 4 of the cylindrical body is then configured to locally remove metallic material from the cylindrical body 1. In order to determine the removal of material, and conversely to avoid melting of the material itself, the control unit 15 is configured, during the removal procedure, to emit a pulsed laser beam: these pulses may have a duration between 100 fs and 1000 ns or between 1 fs and 1000 $\mu$s, and/or a peak power between 1 kW and 10 MW, particularly between 10 kW and 2 MW. The average laser beam power for material removal is between 5 W and 500W, specifically between 10 W and 200 W.

In order to determine material removal, the control unit is configured to emit a pulsed laser beam in which the peak power is greater than the respective average power, specifically greater than 10, 100 or 1000 times of the respective average power.

A laser beam having such characteristics makes it possible to remove material from the cylindrical body 1, generating a powder of metallic material, particularly steel. The removal of material by laser thus consists of a sublimation of the material hit by the laser beam, material that, after moving away from the surface of the cylinder in the vapor phase, recondenses and solidifies a few moments later, generating dust of metallic material: the suction system 20 is therefore configured to suck up the metallic dust in order to reduce risks to human health.

The recovery procedure involves running the detection procedure and the removal procedure iteratively in a loop to define a closed-loop control system: specifically, this loop defines an incremental number of laser beam passes. This allows the control unit to verify the surface condition subsequent to each pass of the laser beam, or after a predefined number of laser beam passes. Once the actual surface conditions have been verified and the differential parameter updated, the control unit may control the laser emitter again according to the updated differential parameter: for example, if the updated differential parameter is different from the previously determined differential parameter, the control unit may be configured to vary one or more of the laser beam control parameters.

Listed below are, in accordance with an embodiment, the steps of the cylindrical body restoration procedure.

The control unit, during the removal procedure, is configured to:

- command the workstation motor to rotate the cylindrical body 1 about its axis of rotation K;
- move the laser emitter along the main axis Z;
- emit the laser beam through the laser emitter in the direction of the working site to remove metal material from the lateral surface 4 of the cylindrical body 1.

The steps of rotating the cylindrical body 1 and moving the laser emitter are performed at full coverage of the surface profile of the cylindrical body 1. The steps of rotating the cylindrical body about its axis of rotation K and moving the laser emitter along the main axis Z during the removal procedure may be performed sequentially, i.e., in which the step of moving the laser emitter is after or before the step of rotating the cylindrical body 1, or simultaneously, i.e., in which the step of moving the laser emitter along the main axis Z is simultaneous, in part or entirely, with the step of rotating the cylindrical body 1.

The removal procedure involves making at least one first and one second pass, optionally making "n" passes with $2 \leq n \leq 20$, of the laser beam at one or more portions of interest of the lateral surface 4 of the cylindrical body 1 to remove a predetermined amount of material during each pass. The control unit is then configured to make a first pass with the laser beam over a portion of interest of the surface of the cylindrical body, detect an updated profile of the cylindrical body 1 at the portion of interest, compare the updated profile with the TSP target surface profile, and make a second pass with the laser beam by modulating the laser beam emitted by the laser emitter 600, 600" according to the comparison between the updated profile and the TSP target surface profile. This procedure allows updating the differential parameter and modulating the laser beam according to the updated differential parameter.

The removal procedure may include a roughing procedure (Figures 6a-6g) and a semi-finishing procedure (Figures 6h-6l). Specifically, the control unit is configured to define, during the removal procedure, a roughing procedure including at least one of:

- command the laser emitter (600, 600") to generate a pulsed laser beam, each of said pulses having an initial time duration in particular within an order of magnitude between 1 ns and 1000 ns;

- optionally command the laser emitter (600, 600") to generate a laser beam having a size less than 50 $\mu$m, specifically less than 20 $\mu$m, said size being the beam diameter.

The control unit is also configured to define, during the removal procedure, a semi-finishing procedure including the step of commanding the laser emitter 600, 600" to generate a pulsed laser beam, each of said pulses having a second time duration shorter than the first time duration.

In particular, the second time duration is at least 10, 100, or 1000 times smaller than the first time duration: for example, the second time duration may be within an order of magnitude between 1 fs and 1000 ps, preferably less than 10 ps.

The semi-finishing procedure may also include commanding the 600, 600" laser emitter to generate a laser beam having a size less than 50 $\mu$m, particularly less than 20 $\mu$m, the size being the beam diameter.

The roughing procedure is configured to define on the lateral surface 4 of the cylindrical body 1 a first surface roughness, while the semi-finishing procedure is configured to define on the lateral surface 4 of the cylindrical body 1 a second surface roughness: the first surface roughness is greater than the second surface roughness, in particular the first surface roughness may be "n" times greater than the second surface roughness with 1.1 < n < 5 .

The average power of the laser emitter (600, 600") during the roughing procedure may be basically the same as the average power of the 600, 600" laser emitter during the semi-finishing procedure: the average power may be between 0.5 W and 500 W, especially between 1 W and 200 W.

The peak power of the laser beam emitted by the 600, 600" laser emitter during the roughing procedure may be lower than the peak power of the laser beam emitted by the 600, 600" laser emitter during the semi-finishing procedure: further the peak power of the laser beam in the roughing procedure may be 10, 100 or 1000 times lower than the peak power of the laser beam in the semi-finishing procedure. The peak power of the laser beam in the roughing procedure may be between 10 kW and 100 KW, and the peak power of the laser beam in the semi-finishing procedure being between 10 kW and 10 MW.

For example, the first average surface roughness (Ra) may be between 0.8 $\mu$m and 2.0 $\mu$m, while the second average surface roughness may be between 0.2 $\mu$m and 0.8 $\mu$m.

The removal procedure may further comprise a finishing procedure, subsequent to the roughing and semi-finishing procedures, comprising at least one among the step of commanding the laser emitter 600, 600" to generate a laser beam of the continuous type or pulses having a long time duration. In particular, the time duration of the laser beam pulses in the finishing procedure is longer than the time duration of the laser beam pulses emitted in the roughing procedure and/or the semi-finishing procedure.

Further, in the finishing procedure, the respective peak power of the laser beam is less than a peak power of the laser beam emitted during the roughing and/or semi-finishing procedure: in particular, the peak power of the laser beam of the finishing procedure is 10, 100 or 1000 times less than a peak power of the laser beam emitted in the roughing and semi-finishing procedure. The control unit may also be configured, in the finishing procedure, to command the laser emitter 600, 600" to generate a laser beam having a size, such as a diameter, greater than a respective size of the laser beam emitted during the roughing and/or semi-finishing procedure.

The finishing procedure is configured to define on the lateral surface 4 of the cylindrical body 1 a finishing surface roughness less than a surface roughness defined during the roughing or semi-finishing procedure. The average surface roughness (Ra) obtained by the finishing procedure is less than 0.5 $\mu$m, specifically 0.4 $\mu$m.

The following is a table indicating preferred values of laser beam control parameters related to a lateral surface cleaning operation, roughing procedure, semi-finishing procedure, and finishing procedure. These values are not intended to be limiting, but on the contrary are intended to provide an order of magnitude of average, standard or preferred values of laser beam control parameters for different applications.

| | Cleaning:<br>Removal of oxides, debris, dirt | Roughing:<br>high material removal High roughness<br>Ra = 0.8 $\mu$m - 2.0 $\mu$m | Semi-finishing:<br>reduction of surface roughness<br>Ra = 0.2 $\mu$m - 0.8 $\mu$m | Finish<br>Ra $\leq$ 0.4 $\mu$m |
|---|---|---|---|---|
| Laser emission | Pulse | Pulse | Pulse | Continuous or pulsed |

(continued)

| | Cleaning:<br>Removal of oxides, debris, dirt | Roughing:<br>high material removal High roughness<br>Ra = 0.8 $\mu$m - 2.0 $\mu$m | Semi-finishing:<br>reduction of surface roughness<br>Ra = 0.2 $\mu$m - 0.8 $\mu$m | Finish<br>Ra $\leq$ 0.4 $\mu$m |
|---|---|---|---|---|
| Pulse duration | From ns to *ps* or fs | *ns* | *ps-fs* | Continuous or pulses of long duration from $\mu$s to ms |
| Average power | >10 W, also up to 1 kW | 10 W - 200 W | 10-200W | >10 W, also up to 1 kW |
| Peak pulse power | >10 kW | > 10 kW | > 10 kW<br>or<br>>1 MW | 10 W - 1 kW |
| Head | Scanner | Proximity head or scanner | Proximity head or scanner | Proximity head or scanner |
| Beam | Scanning | Scanning/Fixed | Scanning/Fixed | Scanning/Fixed |
| Beam size | <100 $\mu$m, preferably <50 $\mu$m | <50 $\mu$m, preferably <20 $\mu$m | <50 $\mu$m, preferably <20 $\mu$m | >100 $\mu$m, preferably >200 $\mu$m |
| Protective gas | Absent | $N_2$, Ar, He or other inert or $O_2$ or other inert | $N_2$, Ar, He or other inert | $N_2$, Ar, He or other inert |

In an embodiment shown schematically by the flowcharts in Figures 13 and 14, the removal procedure 2002 may include:

- moving 2002a at least one between the cylindrical body 1 and the laser emitter 600, 600", and
- commanding the at least one laser emitter 600, 600" to emit 2002b a pulsed laser beam, in which the laser pulses remove material from the cylindrical body 1.

The step of moving 2002a at least one between the cylindrical body 1 and the 600, 600" laser emitter preferably includes placing the cylindrical body 1 in rotation around its axis of rotation K.

The step of moving 2002a at least one between the cylindrical body 1 and the laser emitter 600, 600" may additionally include controlling the oscillation system to determine the oscillation of the laser beam. The oscillation of the laser beam and the rotation of the cylindrical body may be simultaneous steps with each other, as in the embodiment in Figure 12b.

The step of moving 2002a the cylindrical body 1 and/or the 600, 600" laser emitter and the phase of emitting 2002b a pulsed laser beam are essentially simultaneous with each other: in other words, during the rotation of the cylindrical body, the laser emitter emits laser pulses on the lateral surface of the cylindrical body.

The laser beam pulses are temporally staggered with each other to define a laser pulse frequency between 10 kHz and 10,000 kHz.

Each pulse directed toward the lateral surface 4 of the cylindrical body 1 defines on the lateral surface 4 of the cylindrical body 1 a respective laser footprint 40 as shown in Figures 10 to 12 and 12b. The laser footprint may have a shape in the group between circular, elongated circular, elliptical, and curvilinear having a convex contour. The shape of a laser footprint may vary as a function of a duration of the laser beam pulse defining the laser footprint, a rotation speed of the cylindrical body around the rotation axis K during the emission of the laser pulse, or a relative speed between the laser beam and the surface of the cylindrical body. The laser footprint may have a surface extent between 70 $\mu$m$^2$ and 20,000 $\mu$m$^2$.

Note that each laser pulse 10 results in the formation of a crater on the lateral surface 4 of the cylindrical body 1. Such a crater may have a shape and/or surface extent substantially equal to the shape and/or surface extent of the laser footprint. Optionally, the crater may have a slightly smaller surface extent than the surface extent of the laser footprint. Each crater may have a depth between 1 $\mu$m and 20 $\mu$m.

Similarly, an overlapping portion 41 generated by the partial overlap of a first laser pulse and a second laser pulse also results in the formation of a crater on the lateral surface 4 of the cylindrical body 1: such a crater may have a depth of 10 $\mu$m to 100 $\mu$m.

During the removal procedure 2002, the laser pulses define 2002c laser footprints at least in partial overlap with each other by forming respective overlapping portions between said laser footprints. Note that the step 2002c of defining laser footprints at least in partial overlap with each other may be in combination with the step 2001 of detecting the surface profile of the cylindrical body, as described above: such an embodiment is shown schematically in the flow chart in Figure 14.

Alternatively, in accordance with a further embodiment, the restoration procedure 2000 may include the removal procedure 2002, which in turn includes the step 2002c of defining laser footprints at least partially overlapping each other, without necessarily including the 2001 step of detecting the surface profile of the cylindrical body: this embodiment is shown schematically in the flow chart in Figure 13.

Each portion of the overlay may extend for a surface extent of between 10% and 95%, optionally between 25% and 75%, of a surface extent of the laser footprint. Optionally, the overlapping portion may extend for a surface extent substantially equal to 50 % of a surface extent of the laser footprint.

Note that the present method for surface restoration of cylindrical bodies is a method of grinding the lateral surface 4 of said cylindrical bodies 1. Specifically, this grinding method removes from the rolling cylinder a surface layer having a thickness, measured along a radial direction of the cylindrical body, between 10 $\mu$m and 100 $\mu$m.

The lateral surface 4 of these rolling cylinders is made of metallic material, for example, a material including steel or cast iron.

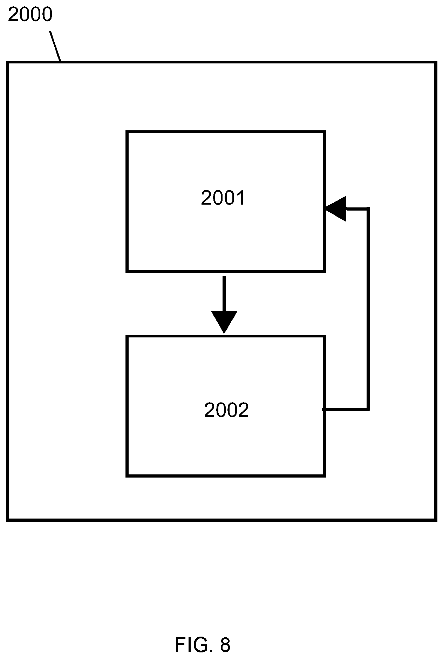

Note also that the methods described above, and schematized by the flowcharts shown in Figures 8, 13 and 14, may be performed by apparatus 10 previously described. In particular, the restoration procedure 2000, and then the removal procedure 2002, are controlled by the control unit 15 of the apparatus. In greater detail, in accordance with the embodiment of figure 14, the control unit 15 of the apparatus performs the detection procedure 2001 and the removal procedure, the latter comprising the steps of moving 2002a the cylindrical body and/or the laser emitter, emitting 2002b the laser beam toward the lateral surface 4 of the cylindrical body, and defining 2002c the overlapping portions 41 between the laser footprints 40.

## Claims

1. Apparatus (10) for surface processing of cylindrical bodies (1), especially for surface restoration of rolling cylinders, said apparatus including:

   - a workstation (100) defining at least one operating location arranged to receive, in an apparatus operating condition (10), a cylindrical body (1) having a lateral surface (4), said workstation (100) being configured to rotationally support the cylindrical body (1) according to a predetermined axis of rotation (K),
   - at least one laser emitter (600, 600") cooperating with the workstation (100) and configured to emit at least one laser beam in the direction of an operating site, said laser emitter (600, 600") being movable at least along a main axis (Z) parallel to the axis of rotation (K) of the cylindrical body (1),
   - at least one profile detector (700) movable at least along a detection axis (Y) parallel to the axis of rotation (K) of the cylindrical body (1) and configured to detect, under said condition of apparatus use, a detected surface profile of the lateral surface (4) of the cylindrical body (1),
   - a control unit (15) operatively connected with the laser emitter (600, 600") and to the at least one profile detector (700), said control unit (15) being configured to perform, during said condition of use of the apparatus (1), at least one restoration procedure of the lateral surface (4) of the cylindrical body (1), said restoration procedure including:

     ◦ a detection procedure including at least the following steps:

        ■ detecting, by means of said profile detector (700), a detected surface profile (DSP) of the cylindrical body (1);
        ■ comparing said detected surface profile (DSP) with a target surface profile (TSP) of the cylindrical body (1);

     ◦ a removal procedure, performed in accordance with said comparison, including at least the following step:

        ■ emitting the laser beam through the laser emitter (600, 600") toward the lateral surface (4) of the cylindrical body (1) to obtain said target surface profile (TSP), said laser beam being configured to locally remove metallic material from the cylindrical body (1), **characterized by** the fact that the control unit (15) is configured to calculate the target surface profile (TSP) according to the detected surface profile (DSP), such that if the target surface profile (TSP) intersects the detected surface profile (DSP), the control unit is configured to calculate a new target surface profile (TSP) that does not intersect the detected surface profile (DSP).

2. Apparatus according to the preceding claim, wherein said detected surface profile (DSP) and said target surface profile (TSP) of the cylindrical body (1) comprise at least one variable geometric feature depending on at least one among:

- an angular position of the cylindrical body (1), and
- a linear position along the detection axis (Y),

and in which said at least one geometric characteristic of the detected surface profile (DSP) includes at least one respective altimetric parameter representative of a diameter of the cylindrical body (1) and/or a variation of said diameter of the cylindrical body (1) and/or an interposed distance, in particular an orthogonal distance, between the lateral surface (4) of the cylindrical body (1) and the profile detector (700),
in which said at least one geometric characteristic of the target surface profile (TSP) includes at least one respective target altimetric parameter representative of a diameter of the cylindrical body (1) and/or a variation of said diameter of the cylindrical body (1) and/or an interposed distance, in particular an orthogonal distance in an operating condition and subsequent to the removal procedure, between the lateral surface (4) of the cylindrical body (1) and the profile detector (700),
the control unit being also configured to:

- move the profile detector (700) along the detection axis (Y);
- detect, during said movement of the profile detector (700) along the detection axis (Y), the at least one geometric feature of said surface profile (DSP) by means of the profile detector (700), and
- associate with said at least one geometric feature of the detected surface profile (DSP) of the cylindrical body (1) a respective linear position along the axis of detection (Y),

and optionally:

- move the cylindrical body (1) in rotation around the axis of rotation (K), specifically by means of an electric motor operationally connected to the cylindrical body, and
- detect the surface profile (DSP) using the profile detector (700) during the rotation of the cylindrical body;
- optionally, associate with said at least one geometric feature of the detected surface profile (DSP) of the cylindrical body (1) a respective angular position of the cylindrical body (1).

3. Apparatus according to any of the preceding claims, in which the control unit (15) is configured, during the removal procedure, to command the laser emitter (600, 600") to emit a pulsed laser beam,

said pulsed laser beam being configured to remove material from the cylindrical body (1), said material being metal,
in which the control unit is configured to emit a pulsed laser beam having a peak power greater than a relative average power, specifically said peak power being 10, 100 or 1000 times greater than the relative average power, in particular in which said impulses have:

- a time duration between 100 fs and 1000 ns or between 1 fs and 1000 μs, and/or
- a peak power between 1 kW and 10 MW, specifically between 10 kW and 2 MW.

4. Apparatus according to any of the preceding claims, in which the comparison between said detected surface profile (DSP) and said target surface profile (TSP) defines a differential profile parameter of the cylindrical body (1), said differential profile parameter being representative of a difference or ratio between said detected surface profile (DSP) and said target surface profile (TSP),
and in which the control unit, during the removal procedure, is configured to adjust, depending on said differential profile parameter, at least one apparatus working parameter in the group between:

- at least one control parameter of the laser beam emitted by the laser emitter (600, 600"), said control parameter including at least one among an average power of the laser beam, a peak power of the laser beam, a duration of the pulses of the laser beam, a duration of the intervals between the pulses of the laser beam, a **size of** the laser beam, a distance between the laser emitter (600, 600") and the outer surface of the cylindrical body (1);
- a displacement speed of the laser emitter (600, 600") along the main direction (Z) during a laser beam emission toward the outer surface of the cylindrical body (1);
- an angular velocity of the cylindrical body (1) about its axis of rotation (K) during a laser beam emission toward the outer surface of the cylindrical body (1);
- a number of passes in which the laser beam insists on the same portion of the lateral surface (4) of the cylindrical body (1);
- a time duration of exposure in which said laser beam insists on the same portion of the lateral surface (4) of the cylindrical body (1), specifically said time duration depending on said angular velocity of the cylindrical body (1) and said displacement velocity of the laser emitter (600, 600");
- an energy parameter representative of an energy emitted by the laser beam at the same portion of the lateral surface (4) of the cylindrical body (1),
in particular where said energy parameter depends on a combination of at least two in the group between:

   ○ said at least one laser emitter control parameter (600, 600"),
   ○ said displacement speed of the laser emitter (600, 600") along the main axis (Z),
   ○ said angular velocity of the cylindrical body (1) about its axis of rotation (K),
   ○ said time duration of exposure,
   ○ said number of passes.

**5.** Apparatus according to the previous claim, in which the control unit is configured for:

   - as a value of said differential parameter increases:

      ○ increase at least one among the average power, the peak power of the laser beam, the time duration of exposure, and the number of passes of the laser beam insisting on the same portion of the lateral surface (4), especially increase the peak power of the laser beam; and/or
      ○ decrease at least one among the angular velocity of the cylindrical body (1), the displacement velocity of the laser emitter (600, 600") along the main direction (Z);

   - as a value of said differential parameter decreases:

      ○ **reduce** at least one among the average power, the peak power of the laser beam, the time duration of exposure, and the number of passes of the laser beam insisting on the same portion of the lateral surface (4), especially reduce the peak power of the laser beam; and/or
      ○ increase at least one among the angular velocity of the cylindrical body (1), the displacement velocity of the laser emitter (600, 600") along the main direction (Z),

   in particular where said differential parameter is proportional to an amount of material to be removed interposed between the detected surface profile (DSP) and target surface profile (TSP).

**6.** Apparatus according to any one of the preceding claims in combination with claims 2 and 4, wherein said differential parameter is variable according to the angular position of the cylindrical body (1) and/or along the detection axis (Y).

**7.** Apparatus according to any of the preceding claims, where the removal procedure includes:

   - setting a predetermined laser emitter control parameter;
   - optionally setting an angular velocity of the cylindrical body (1) around the axis of rotation (K) and/or set a displacement velocity of the profile detector (700) along the detection axis (Y);
   - determining or receive as input a removal index representative of a thickness of material removed from the lateral surface (4) of the cylindrical body (1) during a single pass of the laser beam;
   - depending on the differential parameter of the profile and said removal index, calculating a number of passes of the laser emitter required to obtain said target surface profile (TSP), optionally said number of passes being calculated as the ratio of the differential parameter of the profile to said removal index, in particular said ratio being approximated by default to integer,

   in which as the peak power of the laser beam pulses increases, the removal index increases and the number of laser passes required to obtain the target surface profile (TSP) decreases accordingly,
and in which as the peak power of the laser beam pulses decreases, the removal index decreases and the number of laser passes required to obtain the target surface profile (TSP) increases accordingly.

8. Apparatus according to any one of the preceding claims, wherein the step of detecting, by means of said profile detector (700), the outer profile of the cylindrical body (1) comprises the steps of:

- angularly rotating the cylindrical body (1) about its axis of rotation (K), and
- moving the profile detector (700) along the detection axis (Y) to cover at least partially, especially entirely, a length of the outer surface of the cylindrical body (1), said length being measured parallel to the axis of rotation (K) of the cylindrical body (1),

particularly said steps of rotating and moving being performed in that order or in reverse order, or simultaneously,
and in which the control unit, during the removal procedure, is configured to:

- rotate the cylindrical body (1);
- move the laser emitter along the main axis (Z);
- emit the laser beam through the laser emitter in the direction of the working site to remove metal material from the lateral surface (4) of the cylindrical body (1),

in which the steps of rotating the cylindrical body (1) and moving the laser emitter are performed in that order or in reverse order, or simultaneously, at full coverage of the surface profile of the cylindrical body (1).

9. Apparatus according to any of the preceding claims, in which the restoration procedure includes performing the detection procedure and the removal procedure iteratively in a loop to define a closed-loop control system, optionally in which such a loop defines an incremental number of laser beam passes at the same portion of the cylindrical body,

in which the removal procedure involves making at least a first and a second pass, optionally making "n" passes with $2 \leq n \leq 20$, of the laser beam at one or more portions of interest of the lateral surface (4) of the cylindrical body (1) to remove a predetermined amount of material during each pass,
and in which the control unit is configured to:

- command, temporally between said first and second passes, the profile detector (700) to detect an updated profile of the cylindrical body (1) at said portion of interest,
- compare said updated profile with the target surface profile (TSP);
- modulate the laser beam emitted by the laser emitter (600, 600") during the second pass according to said comparison between the updated profile and the target surface profile (TSP) and update the respective differential parameter, said modulation step being dependent on said updated differential parameter,

optionally in which said first and second passes are not necessarily consecutive.

10. Apparatus according to any of the previous claims, in which the control unit is configured to control at least one of the following working parameters:

- an average or peak power of the laser emitter (600, 600"), said average or peak power being adjustable between a minimum power (Pmin) and a maximum power (Pmax);
- a laser beam pulse duration, said laser pulse duration being adjustable between a minimum laser pulse duration (Tmin) and a maximum laser pulse duration (Tmax),

in particular in which said control unit is configured to modulate both the laser emitter power (600, 600") and the duration of a laser beam pulse.

11. Apparatus according to any of the preceding claims, wherein the control unit is configured to define, during the removal procedure, a roughing procedure comprising at least one of:

- command the laser emitter (600, 600") to generate a pulsed laser beam, each of said pulses having an initial time duration in particular within an order of magnitude between 1 ns and 1000 ns;

- optionally command the laser emitter (600, 600") to generate a laser beam having a size less than 50 $\mu$m, specifically less than 20 $\mu$m, said size being the beam diameter,

the control unit being also configured to define, during the removal procedure, a semi-finishing procedure including at least one among the steps of:

- commanding the laser emitter (600, 600") to generate a pulsed laser beam, each of said pulses having a second time duration shorter than said first time duration, in particular said second time duration being at least 10, 100 or 1000 times less than said first time duration, said second time duration being in particular within an order of magnitude between 1 fs and 1000 ps, preferably less than 10 ps;
- optionally commanding the laser emitter (600, 600") to generate a laser beam having a size less than 50 $\mu$m, specifically less than 20 $\mu$m, said size being the beam diameter,

in which the roughing procedure is configured to define on the lateral surface (4) of the cylindrical body (1) a first surface roughness, and in which the semi-finishing procedure is configured to define on the lateral surface (4) of the cylindrical body (1) a second surface roughness, said first surface roughness being greater than the second surface roughness, specifically said first surface roughness being "n" times greater than the second surface roughness with 1.1 <n< 5
optionally in which:

- the average power of the laser emitter (600, 600") during the roughing procedure is the same as the average power of the laser emitter (600, 600") during the semi-finishing procedure, said average power being in particular between 0.5 W and 500 W, in particular between 1 W and 200 W, and/or
- the peak power of the laser beam emitted by the laser emitter (600, 600") during the roughing procedure is lower than the peak power of the laser beam emitted by the laser emitter (600, 600") during the semi-finishing procedure, said peak power of the laser beam in the roughing procedure being 10, 100 or 1000 times lower than the peak power of the laser beam in the semi-finishing procedure, specifically said laser beam peak power in the roughing procedure being between 10 kW and 100 kW, and said laser beam peak power in the semi-finishing procedure being between 10 kW and 10 MW,

optionally in which:

- the first surface roughness is between 0.8 $\mu$m and 2.0 $\mu$m;
- the second surface roughness is between 0.2 $\mu$m and 0.8 $\mu$m,

and in which said laser emitter is configured to emit, during the roughing and/or semi-finishing procedure, a laser beam having a wavelength between 0.3 $\mu$m and 1 $\mu$m; in which the control unit is configured to define, during the removal procedure, a finishing procedure comprising at least one of:

- commanding the laser emitter (600, 600") to generate a laser beam of the type:

  ∘ continuous, or
  ∘ with pulses, said pulses having:

  ■ a respective time duration greater than the time duration of the laser beam pulses emitted in the roughing procedure and the semi-finishing procedure, in particular said time duration of the pulses in the finishing procedure being within an order of magnitude between 1 $\mu$s and 1000 ms; and/or
  ■ a respective peak power less than a peak power of the laser beam emitted in the roughing procedure and the semi-finishing procedure, in particular said peak power of the laser beam of the finishing procedure being 10, 100 or 1000 times less than a peak power of the laser beam emitted in the roughing procedure and the semi-finishing procedure,

- optionally commanding the laser emitter (600, 600") to generate a laser beam having a size greater than 100 $\mu$m, in particular greater than 200 $\mu$m, said size being specifically between 100 $\mu$m and 500 $\mu$m,

in which the finishing procedure is configured to define on the lateral surface (4) of the cylindrical body (1) a finishing surface roughness of less than 0.5 $\mu$m, specifically less than 0.4 $\mu$m, specifically between 0.05 $\mu$m and 0.4 $\mu$m.

12. Apparatus according to any of the preceding claims, wherein the apparatus comprises

a gas nozzle (610) configured to deliver a flow of gas in the direction of a portion of the lateral surface (4) of the cylindrical body (1) affected by the laser beam, optionally said lateral surface portion (4) being the working portion of the lateral surface (4) of the cylindrical body (1),
wherein said gas nozzle (610) is configured to deliver at least one of:

- a nonoxidizing gas, particularly an inert gas, particularly said nonoxidizing gas including at least one in the group between nitrogen, helium, and argon; and
- a reactive gas configured to interact with the lateral surface (4) of the cylindrical body (1) to bring about chemical changes in said portion of the lateral surface (4) of the cylindrical body (1) affected by the laser beam, said reactive gas comprising at least one of oxygen, or air,

and where the apparatus includes a shielding cover (1000) defining an internal volume housing at least the workstation and laser emitter, optionally also the profile detector (700),
said shielding cover (1000) being configured to confine the laser beam within said internal volume preventing it from escaping,
and in which the internal volume of said shielding cover (1000) is in communication with the external environment only through a filter device configured to prevent the escape of metal dust, generated by the removal procedure, from the internal volume to the surrounding environment.

13. Apparatus according to any of the preceding claims, in which:

- the apparatus includes a first and a second laser source (601, 601") each connected by a respective cable, especially a fiber optic cable, to said laser emitter (600), specifically the cable of the first source and the cable of the second laser source flowing into the same laser emitter (600),

in which said first laser source (601) is configured to originate a first laser beam; and in which said second laser source (601") is configured to originate a second laser beam;
said first laser beam including at least one control parameter, particularly a peak power or duration of laser pulses, or a different wavelength from said second laser beam,
in which the control unit is configured to selectively activate the first or second laser source (601, 601") to emit the respective laser beam to the laser emitter,

or where:

- the apparatus includes said laser emitter (600) and an auxiliary laser emitter (600") which are distinct from each other and located at different positions in the workstation,

the apparatus further including:

∘ **a first** laser source (601) connected by a respective first cable, specifically a fiber optic cable, to said laser emitter (600), and
∘ a second laser source (601") connected by a respective second cable, specifically a fiber optic cable, to said auxiliary laser emitter,

in which said first laser source (601) is configured to originate a first laser beam, and in which said second laser source (601") is configured to originate a second laser beam;
in which the laser emitter (600) is configured to emit the first laser beam along a first emission direction, while the auxiliary laser emitter (600") is configured to emit the second laser beam along a second emission direction, in which said first emission direction and said second emission direction intersect different areas of the operating site or, during an operating condition, different portions of the lateral surface (4) of the cylindrical body (1),
and in which the control unit is configured to simultaneously or selectively activate the first and second laser sources (601, 601") to emit the respective laser beam, optionally in which:

∘ said first laser beam includes at least one control parameter or wavelength different from said second laser beam, wherein the control unit is configured to simultaneously or selectively activate the first and second laser sources to emit the respective laser beam,

or

∘ said first laser beam and said second laser beam have the same wavelength, and in which the control unit is configured to simultaneously or selectively activate the first and second laser sources to emit the respective laser beam.

14. Apparatus according to any of the preceding claims, wherein the control unit (15) is

configured, during the removal procedure (2002), to command the at least one laser emitter (600, 600") to emit a pulsed laser beam suitable for removing material from the cylindrical body (1), and in which the removal procedure (2002) includes of:

- **moving** (2002a) at least one between said cylindrical body (1) and said at least one laser emitter (600, 600"), optionally place the cylindrical body (1) in rotation around its axis of rotation (K), and
- commanding the at least one laser emitter (600, 600") to emit (2002b) said pulsed laser beam, said pulses being capable of removing material from the cylindrical body (1),

said laser beam pulses being temporally staggered with each other,

in which each pulse directed toward the lateral surface (4) of the cylindrical body (1) is configured to define, on said lateral surface (4) of the cylindrical body (1) during said operating condition of the apparatus, a respective laser footprint (40), said laser pulses by defining laser footprints at least partially overlapping each other by forming respective overlapping portions (41) between said laser footprints,

and in which the step of moving at least one between said cylindrical body (1) and said at least one laser emitter (600, 600") and said step of commanding the at least one laser emitter (600, 600") to emit (2002b) a pulsed laser beam are simultaneous with each other.

15. A method for surface restoration of cylindrical bodies (1), optionally by means of an

apparatus in accordance with any one of the preceding claims, wherein said cylindrical body (1) is movable by rotation about an axis of rotation (K) and includes a lateral surface (4) extending in length between a first and a second end of the cylindrical body (1),

said method including at least one restoration procedure (2000) of the lateral surface (4) of the cylindrical body (1), said restoration procedure (2000) including:

∘ a detection procedure (2001) including at least the following steps:

■ detecting, using a profile detector (700), a surface profile (DSP) of the lateral surface (4) of the cylindrical body (1);

■ comparing said detected surface profile with a target surface profile (TSP) of the cylindrical body (1);

∘ a removal procedure (2002), performed according to said comparison, including the phase of:

■ emit a laser beam through a laser emitter (600, 600") toward the lateral surface (4) of the cylindrical body (1) to achieve said target surface profile (TSP), said laser beam locally removing metallic material from the cylindrical body (1),

**characterized in that**

a control unit (15) is configured to calculate the target surface profile (TSP) according to the detected surface profile (DSP), such that if the target surface profile (TSP) intersects the detected surface profile (DSP), the control unit is configured to calculate a new target surface profile (TSP) that does not intersect the detected surface profile (DSP).

**Patentansprüche**

1. Vorrichtung (10) zur Oberflächenverarbeitung zylindrischer Körper (1), insbesondere zur Oberflächenwiederherstellung von Walzen, wobei die Vorrichtung umfasst:

- einen Arbeitsplatz (100), welcher wenigstens einen Betriebsort definiert, welcher dazu angeordnet ist, einen zylindrischen Körper (1), welcher eine laterale Oberfläche (4) aufweist, in einem Vorrichtung-Betriebszustand (10) aufzunehmen, wobei der Arbeitsplatz (100) dazu eingerichtet ist, den zylindrischen Körper (1) gemäß einer vorbestimmten Rotationsachse (K) rotierend zu haltern,

- wenigstens einen Laseremitter (600, 600"), welcher mit dem Arbeitsplatz (100) zusammenwirkt und welcher dazu eingerichtet ist, wenigstens einen Laserstrahl in Richtung einer Betriebsstelle zu emittieren, wobei der Laseremitter (600, 600") wenigstens entlang einer Hauptachse (Z) bewegbar ist, welche parallel zu der Rotationsachse (K) des zylindrischen Körpers (1) ist,

- wenigstens einen Profildetektor (700), welcher wenigstens entlang einer Detektionsachse (Y) bewegbar ist, welche parallel zu der Rotationsachse (K) des zylindrischen Körpers (1) ist, und welcher dazu eingerichtet ist, in dem Zustand einer Vorrichtungsverwendung ein detektiertes Oberflächenprofil der lateralen Oberfläche (4) des zylindrischen Körpers (1) zu detektieren,

- eine Steuereinheit (15), welche betriebsfähig mit dem Laseremitter (600, 600") und dem wenigstens einen Profildetektor (700) verbunden ist, wobei die Steuereinheit (15) dazu eingerichtet ist, während des Zustands einer Verwendung der Vorrichtung (1) wenigstens einen Wiederherstellungsvorgang der lateralen Oberfläche (4) des zylindrischen Körpers (1) durchzuführen, wobei der Wiederherstellungsvorgang umfasst:

- einen Detektionsvorgang, welcher wenigstens die folgenden Schritte umfasst:

- Detektieren, mittels des Profildetektors (700), eines detektierten Oberflächenprofils (DSP) des zylindrischen Körpers (1);
- Vergleichen des detektierten Oberflächenprofils (DSP) mit einem Zieloberflächenprofil (TSP) des zylindrischen Körpers (1);

- einen Abtragungsvorgang, welcher in Übereinstimmung mit dem Vergleich durchgeführt wird und welcher wenigstens die folgenden Schritte umfasst:

- Emittieren des Laserstrahls durch den Laseremitter (600, 600") in Richtung der lateralen Oberfläche (4) des zylindrischen Körpers (1), um das Zieloberflächenprofil (TSP) zu erhalten, wobei der Laserstrahl dazu eingerichtet ist, metallisches Material von dem zylindrischen Körper (1) lokal abzutragen,

**dadurch gekennzeichnet, dass** die Steuereinheit (15) dazu eingerichtet ist, das Zieloberflächenprofil (TSP) gemäß dem detektierten Oberflächenprofil (DSP) zu berechnen, so dass, falls das Zieloberflächenprofil (TSP) das detektierte Oberflächenprofil (DSP) schneidet, die Steuereinheit dazu eingerichtet ist, ein neues Zieloberflächenprofil (TSP) zu berechnen, welches das detektierte Oberflächenprofil (DSP) nicht schneidet.

2. Vorrichtung nach dem vorhergehenden Anspruch, wobei das detektierte Oberflächenprofil (DSP) und das Zieloberflächenprofil (TSP) des zylindrischen Körpers (1) wenigstens ein variables geometrisches Merkmal umfasst, welches von wenigstens einem abhängig ist, aus:

- einer Winkelposition des zylindrischen Körpers (1), und
- einer linearen Position entlang der Detektionsachse (Y),

und wobei die wenigstens eine geometrische Charakteristik des detektierten Oberflächenprofils (DSP) wenigstens einen jeweiligen altimetrischen Parameter umfasst, welcher für einen Durchmesser des zylindrischen Körpers (1) und/oder eine Variation des Durchmessers des zylindrischen Körpers (1) und/oder eine eingefügte Distanz, insbesondere eine orthogonale Distanz, zwischen der lateralen Oberfläche (4) des zylindrischen Körpers (1) und dem Profildetektor (700) repräsentativ ist, wobei die wenigstens eine geometrische Charakteristik des Zieloberflächenprofils (TSP) wenigstens einen jeweiligen altimetrischen Zielparameter umfasst, welcher für einen Durchmesser des zylindrischen Körpers (1) und/oder eine Variation des Durchmessers des zylindrischen Körpers (1) und/oder eine eingefügte Distanz, insbesondere eine orthogonale Distanz in einem Betriebszustand und nachfolgend auf den Abtragungsvorgang, zwischen der lateralen Oberfläche (4) des zylindrischen Körpers (1) und dem Profildetektor (700) repräsentativ ist, wobei die Steuereinheit ferner eingerichtet ist, zum:

- Bewegen des Profildetektors (700) entlang der Detektionsachse (Y);
- Detektieren, während der Bewegung des Profildetektors (700) entlang der Detektionsachse (Y), des wenigstens einen geometrischen Merkmals des Oberflächenprofils (DSP) mittels des Profildetektors (700), und

- Assoziieren mit dem wenigstens einen geometrischen Merkmal des detektierten Oberflächenprofils (DSP) des zylindrischen Körpers (1) einer jeweiligen linearen Position entlang der Detektionsachse (Y),

und optional:

- Bewegen des zylindrischen Körpers (1) in Rotation um die Rotationsachse (K), insbesondere mittels eines Elektromotors, welcher betriebsfähig mit dem zylindrischen Körper verbunden ist, und
- Detektieren des Oberflächenprofils (DSP) unter Verwendung des Profildetektors (700) während der Rotation des zylindrischen Körpers;
- optional Assoziieren mit dem wenigstens einen geometrischen Merkmal des detektierten Oberflächenprofils (DSP) des zylindrischen Körpers (1) einer jeweiligen Winkelposition des zylindrischen Körpers (1).

3. Vorrichtung nach einem der vorhergehenden Ansprüche, wobei die Steuereinheit (15) dazu eingerichtet ist, während des Abtragungsvorgangs den Laseremitter (600, 600") zu befehligen, um einen pulsierten Laserstrahl zu emittieren,

wobei der pulsierte Laserstrahl dazu eingerichtet ist, Material von dem zylindrischen Körper (1) abzutragen, wobei das Material Metall ist,
wobei die Steuereinheit dazu eingerichtet ist, einen pulsierten Laserstrahl zu emittieren, welcher eine Spitzenleistung größer als eine relative Durchschnittsleistung aufweist, insbesondere wobei die Spitzenleistung 10-, 100- oder 1000-mal größer als die relative Durchschnittsleistung ist,
insbesondere wobei die Pulse aufweisen:

- eine Zeitdauer zwischen 100 fs und 1000 ns oder zwischen 1 fs und 1000 $\mu$s, und/oder
- eine Spitzenleistung zwischen 1 kW und 10 MW, insbesondere zwischen 10 kW und 2 MW.

4. Vorrichtung nach einem der vorhergehenden Ansprüche, wobei der Vergleich zwischen dem detektierten Oberflächenprofil (DSP) und dem Zieloberflächenprofil (TSP) einen Differentialprofilparameter des zylindrischen Körpers (1) definiert, wobei der Differentialprofilparameter für eine Differenz oder ein Verhältnis zwischen dem detektierten Oberflächenprofil (DSP) und dem Zieloberflächenprofil (TSP) repräsentativ ist,

und wobei die Steuereinheit während des Abtragungsvorgangs dazu eingerichtet ist, in Abhängigkeit des Differentialprofilparameters wenigstens einen Vorrichtung-Betriebsparameter in der Gruppe anzupassen, zwischen:

- wenigstens einem Steuerparameter des Laserstrahls, welcher durch den Laseremitter (600, 600") emittiert worden ist, wobei der Steuerparameter wenigstens einer aus einer Durchschnittsleistung des Laserstrahls, einer Spitzenleistung des Laserstrahls, einer Dauer der Pulse des Laserstrahls, einer Dauer der Intervalle zwischen den Pulsen des Laserstrahls, einer Größe des Laserstrahls und einer Distanz zwischen dem Laseremitter (600, 600") und der äußeren Oberfläche des zylindrischen Körpers (1) umfasst;
- einer Verlagerungsgeschwindigkeit des Laseremitters (600, 600") entlang der Hauptrichtung (Z) während einer Laserstrahlemission in Richtung der äußeren Oberfläche des zylindrischen Körpers (1);
- einer Winkelgeschwindigkeit des zylindrischen Körpers (1) um seine Rotationsachse (K) während einer Laserstrahlemission in Richtung der äußeren Oberfläche des zylindrischen Körpers (1);
- einer Anzahl an Durchläufen, bei welchen der Laserstrahl auf dem gleichen Abschnitt der lateralen Oberfläche (4) des zylindrischen Körpers (1) besteht;
- einer Zeitdauer einer Exposition, bei welcher der Laserstrahl auf dem gleichen Abschnitt der lateralen Oberfläche (4) des zylindrischen Körpers (1) besteht, insbesondere der Zeitdauer in Abhängigkeit der Winkelgeschwindigkeit des zylindrischen Körpers (1) und der Verlagerungsgeschwindigkeit des Laseremitters (600, 600");
- einem Energieparameter, welcher für eine Energie repräsentativ ist, welche durch den Laserstrahl an dem gleichen Abschnitt der lateralen Oberfläche (4) des zylindrischen Körpers (1) emittiert worden ist,

insbesondere wobei der Energieparameter von einer Kombination wenigstens zweier in der Gruppe abhängig ist, zwischen:

- dem wenigstens einen Laseremitter-Steuerparameter (600, 600"),
- der Verlagerungsgeschwindigkeit des Laseremitters (600, 600") entlang der Hauptachse (Z),

- der Winkelgeschwindigkeit des zylindrischen Körpers (1) um seine Rotationsachse (K),
- der Zeitdauer einer Exposition,
- der Anzahl an Durchläufen.

5. Vorrichtung nach einem der vorhergehenden Ansprüche, wobei die Steuereinheit eingerichtet ist, zum:

- wenn sich ein Wert des Differentialparameters erhöht:

- Erhöhen wenigstens einer aus der Durchschnittsleistung, der Spitzenleistung des Laserstrahls, der Zeitdauer einer Exposition und der Anzahl an Durchläufen des Laserstrahls, welcher auf dem gleichen Abschnitt der lateralen Oberfläche (4) besteht, insbesondere Erhöhen der Spitzenleistung des Laserstrahls; und/oder
- Verringern wenigstens einer aus der Winkelgeschwindigkeit des zylindrischen Körpers (1) und der Verlagerungsgeschwindigkeit des Laseremitters (600, 600") entlang der Hauptrichtung (Z);

- wenn sich ein Wert des Differentialparameters verringert:

- Reduzieren wenigstens einer aus der Durchschnittsleistung, der Spitzenleistung des Laserstrahls, der Zeitdauer einer Exposition und der Anzahl an Durchläufen des Laserstrahls, welcher auf dem gleichen Abschnitt der lateralen Oberfläche (4) besteht, insbesondere Reduzieren der Spitzenleistung des Laserstrahls; und/oder
- Erhöhen wenigstens einer aus der Winkelgeschwindigkeit des zylindrischen Körpers (1) und der Verlagerungsgeschwindigkeit des Laseremitters (600, 600") entlang der Hauptrichtung (Z),

insbesondere wobei der Differentialparameter proportional zu einer abzutragenden Materialmenge ist, welche zwischen dem detektierten Oberflächenprofil (DSP) und dem Zieloberflächenprofil (TSP) eingefügt ist.

6. Vorrichtung nach einem der vorhergehenden Ansprüche, in Kombination mit den Ansprüchen 2 und 4, wobei der Differentialparameter gemäß der Winkelposition des zylindrischen Körpers (1) und/oder entlang der Detektionsachse (Y) variabel ist.

7. Vorrichtung nach einem der vorhergehenden Ansprüche, wobei der Abtragungsvorgang umfasst:

- Festlegen eines vorbestimmten Laseremitter-Steuerparameters;
- optionales Festlegen einer Winkelgeschwindigkeit des zylindrischen Körpers (1) um die Rotationsachse (K) und/oder Festlegen einer Verlagerungsgeschwindigkeit des Profildetektors (700) entlang der Detektionsachse (Y);
- Bestimmen oder Empfangen als Eingabe eines Abtragungsindex, welcher für eine Dicke eines Materials repräsentativ ist, welches von der lateralen Oberfläche (4) des zylindrischen Körpers (1) während eines einzelnen Durchlaufs des Laserstrahls abgetragen worden ist;
- in Abhängigkeit des Differentialparameters des Profils und des Abtragungsindex, Berechnen einer Anzahl an Durchläufen des Laseremitters, welche benötigt sind, um das Zieloberflächenprofil (TSP) zu erhalten, optional wobei die Anzahl an Durchläufen als das Verhältnis des Differentialparameters des Profils zu dem Abtragungsindex berechnet wird, insbesondere wobei das Verhältnis standardmäßig als ganze Zahl angenähert wird,

wobei, wenn sich die Spitzenleistung der Laserstrahlpulse erhöht, sich der Abtragungsindex erhöht und sich die Anzahl an Laserdurchläufen folglich verringert, welche zum Erhalten des Zieloberflächenprofils (TSP) benötigt ist,
und wobei, wenn sich die Spitzenleistung der Laserstrahlpulse verringert, sich der Abtragungsindex verringert und sich die Anzahl an Laserdurchläufen folglich erhöht, welche zum Erhalten des Zieloberflächenprofils (TSP) benötigt ist.

8. Vorrichtung nach einem der vorhergehenden Ansprüche, wobei der Schritt eines Detektierens des äußeren Profils des zylindrischen Körpers (1) mittels des Profildetektors (700) die folgenden Schritte umfasst:

- winkelmäßiges Rotieren des zylindrischen Körpers (1) um seine Rotationsachse (K), und
- Bewegen des Profildetektors (700) entlang der Detektionsachse (Y), um wenigstens teilweise, insbesondere vollständig, eine Länge der äußeren Oberfläche des zylindrischen Körpers (1) zu bedecken, wobei die Länge parallel zu der Rotationsachse (K) des zylindrischen Körpers (1) gemessen ist,
insbesondere wobei die Schritte eines Rotierens und Bewegens in dieser Reihenfolge oder in umgekehrter Reihenfolge oder gleichzeitig durchgeführt werden,
und wobei die Steuereinheit während des Abtragungsvorgangs eingerichtet ist, zum:

- Rotieren des zylindrischen Körpers (1);
- Bewegen des Laseremitters entlang der Hauptachse (Z);
- Emittieren des Laserstrahls durch den Laseremitter in der Richtung der Arbeitsstelle, um Metallmaterial von der lateralen Oberfläche (4) des zylindrischen Körpers (1) abzutragen,

wobei die Schritte eines Rotierens des zylindrischen Körpers (1) und eines Bewegens des Laseremitters in dieser Reihenfolge oder in umgekehrter Reihenfolge oder gleichzeitig bei vollständiger Bedeckung des Oberflächenprofils des zylindrischen Körpers (1) durchgeführt werden.

9. Vorrichtung nach einem der vorhergehenden Ansprüche, wobei der Wiederherstellungsvorgang ein iteratives Durchführen des Detektionsvorgangs und des Abtragungsvorgangs in einem Zyklus umfasst, um ein geschlossenes Steuersystem zu definieren, optional wobei solch ein Zyklus eine inkrementelle Anzahl an Laserstrahldurchläufen an dem gleichen Abschnitt des zylindrischen Körpers definiert,

wobei der Abtragungsvorgang ein Erzeugen wenigstens eines ersten und eines zweiten Durchlaufs, optional ein Erzeugen von "$n$" Durchläufen, wobei $2 \leq n \leq 20$, des Laserstrahls an einem oder mehreren Abschnitten von Interesse der lateralen Oberfläche (4) des zylindrischen Körpers (1) involviert, um eine vorbestimmte Menge an Material während jedes Durchlaufs abzutragen,
und wobei die Steuereinheit eingerichtet ist, zum:

- Befehligen, temporär zwischen dem ersten und zweiten Durchlauf, des Profildetektors (700), um ein aktualisiertes Profil des zylindrischen Körpers (1) an dem Abschnitt von Interesse zu detektieren,
- Vergleichen des aktualisierten Profils mit dem Zieloberflächenprofil (TSP);
- Modulieren des Laserstrahls, welcher während des zweiten Durchlaufs durch den Laseremitter (600, 600") emittiert wird, gemäß dem Vergleich zwischen dem aktualisierten Profil und dem Zieloberflächenprofil (TSP) und Aktualisieren des jeweiligen Differentialparameters, wobei der Modulierungsschritt von dem aktualisierten Differentialparameter abhängig ist,

optional wobei der erste und zweite Durchlauf nicht notwendigerweise aufeinanderfolgend sind.

10. Vorrichtung nach einem der vorhergehenden Ansprüche, wobei die Steuereinheit dazu eingerichtet ist, wenigstens einen aus den folgenden Arbeitsparametern zu steuern:

- eine Durchschnitt- oder Spitzenleistung des Laseremitters (600, 600"), wobei die Durchschnitt- oder Spitzenleistung zwischen einer minimalen Leistung (Pmin) und einer maximalen Leistung (Pmax) anpassbar ist;
- eine Laserstrahl-Pulsdauer, wobei die Laserpulsdauer zwischen einer minimalen Laserpulsdauer (Tmin) und einer maximalen Laserpulsdauer (Tmax) anpassbar ist,

insbesondere wobei die Steuereinheit dazu eingerichtet ist, sowohl die Laseremitterleistung (600, 600") als auch die Dauer eines Laserstrahlpulses zu modulieren.

11. Vorrichtung nach einem der vorhergehenden Ansprüche, wobei die Steuereinheit dazu eingerichtet ist, während des Abtragungsvorgangs einen Aufrauvorgang zu definieren, welcher wenigstens eines umfasst, aus:

- Befehligen des Laseremitters (600, 600"), um einen pulsierten Laserstrahl zu erzeugen, wobei jeder der Pulse eine initiale Zeitdauer insbesondere innerhalb einer Größenordnung zwischen 1 ns und 1000 ns aufweist;
- optional Befehligen des Laseremitters (600, 600"), um einen Laserstrahl zu erzeugen, welcher eine Größe von weniger als 50 $\mu$m, insbesondere weniger als 20 $\mu$m, aufweist, wobei die Größe der Strahldurchmesser ist,

wobei die Steuereinheit ferner dazu eingerichtet ist, während des Abtragungsvorgangs einen Halbfertigungsvorgang zu definieren, welcher wenigstens einen aus den Schritten umfasst, aus:

- Befehligen des Laseremitters (600, 600"), um einen pulsierten Laserstrahl zu erzeugen, wobei jeder der Pulse eine zweite Zeitdauer aufweist, welche kürzer als die erste Zeitdauer ist, insbesondere wobei die zweite Zeitdauer wenigstens 10-, 100- oder 1000-Mal kleiner als die erste Zeitdauer ist, wobei die zweite Zeitdauer insbesondere innerhalb einer Größenordnung zwischen 1 fs und 1000 ps ist, vorzugsweise weniger als 10 ps ist,

- optional Befehligen des Laseremitters (600, 600"), um einen Laserstrahl zu erzeugen, welcher eine Größe von weniger als 50 $\mu$m, insbesondere weniger als 20 $\mu$m, aufweist, wobei die Größe der Strahldurchmesser ist,

wobei der Aufrauvorgang dazu eingerichtet ist, an der lateralen Oberfläche (4) des zylindrischen Körpers (1) eine erste Oberflächenrauigkeit zu definieren, und wobei der Halbfertigungsvorgang dazu eingerichtet ist, an der lateralen Oberfläche (4) des zylindrischen Körpers (1) eine zweite Oberflächenrauigkeit zu definieren, wobei die erste Oberflächenrauigkeit größer als die zweite Oberflächenrauigkeit ist, insbesondere wobei die erste Oberflächenrauigkeit "n"-Mal größer als die zweite Oberflächenrauigkeit ist, wobei $1,1 \leq n \leq 5$, optional wobei:

- die Durchschnittsleistung des Laseremitters (600, 600") während des Aufrauvorgangs die gleiche wie die Durchschnittsleistung des Laseremitters (600, 600") während des Halbfertigungsvorgangs ist, wobei die Durchschnittsleistung insbesondere zwischen 0,5 W und 500 W ist, insbesondere zwischen 1 W und 200W ist, und/oder

- die Spitzenleistung des Laserstrahls, welcher während des Aufrauvorgangs durch den Laseremitter (600, 600") emittiert wird, geringer als die Spitzenleistung des Laserstrahls ist, welcher während des Halbfertigungsvorgangs durch den Laseremitter (600, 600") emittiert wird, wobei die Spitzenleistung des Laserstrahls in dem Aufrauvorgang 10-, 100- oder 1000-Mal kleiner als die Spitzenleistung des Laserstrahls in dem Halbfertigungsvorgang ist, insbesondere wobei die Laserstrahl-Spitzenleistung in dem Aufrauvorgang zwischen 10 kW und 100 kW ist, und wobei die Laserstrahl-Spitzenleistung in dem Halbfertigungsvorgang zwischen 10 kW und 10 MW ist,

optional wobei:

- die erste Oberflächenrauigkeit zwischen 0,8 $\mu$m und 2,0 $\mu$m beträgt;
- die zweite Oberflächenrauigkeit zwischen 0,2 $\mu$m und 0,8 $\mu$m beträgt,

und wobei der Laseremitter dazu eingerichtet ist, während des Aufrau- und/oder Halbfertigungsvorgangs einen Laserstrahl zu emittieren, welcher eine Wellenlänge zwischen 0,3 $\mu$m und 1 $\mu$m aufweist; wobei die Steuereinheit dazu eingerichtet ist, während des Abtragungsvorgangs einen Fertigungsvorgang zu definieren, welcher wenigstens eines umfasst, aus:

- Befehligen des Laseremitters (600, 600"), um einen Laserstrahl zu erzeugen, vom Typ:

- kontinuierlich, oder
- mit Pulsen, wobei die Pulse aufweisen:

- eine jeweilige Zeitdauer, welche größer als die Zeitdauer der Laserstrahlpulse ist, welche in dem Aufrauvorgang und dem Halbfertigungsvorgang emittiert werden, insbesondere wobei die Zeitdauer der Pulse in dem Fertigungsvorgang innerhalb einer Größenordnung zwischen 1 $\mu$s und 1000 ms ist; und/oder
- eine jeweilige Spitzenleistung, welche kleiner als eine Spitzenleistung des Laserstrahls ist, welcher in dem Aufrauvorgang und dem Halbfertigungsvorgang emittiert wird, insbesondere wobei die Spitzenleistung des Laserstrahls des Fertigungsvorgangs 10-, 100- oder 1000-Mal kleiner als eine Spitzenleistung des Laserstrahls ist, welcher in dem Aufrauvorgang und dem Halbfertigungsvorgang emittiert wird,

- optional Befehligen des Laseremitters (600, 600"), um einen Laserstrahl zu erzeugen, welcher eine Größe größer als 100 $\mu$m, insbesondere größer als 200 $\mu$m, aufweist, wobei die Größe insbesondere zwischen 100 $\mu$m und 500 $\mu$m beträgt,

wobei der Fertigungsvorgang dazu eingerichtet ist, an der lateralen Oberfläche (4) des zylindrischen Körpers (1) eine Fertigungsoberflächenrauigkeit von weniger als 0,5 $\mu$m, insbesondere weniger als 0,4 $\mu$m,

insbesondere zwischen 0,05 $\mu$m und 0,4 $\mu$m zu definieren.

12. Vorrichtung nach einem der vorhergehenden Ansprüche, wobei die Vorrichtung eine Gasdüse (610) umfasst, welche dazu eingerichtet ist, einen Gasstrom in Richtung eines Abschnitts der lateralen Oberfläche (4) des zylindrischen Körpers (1) zuzuführen, welcher durch den Laserstrahl beeinflusst ist, optional wobei der laterale Oberflächenabschnitt (4) der Arbeitsabschnitt der lateralen Oberfläche (4) des zylindrischen Körpers (1) ist,

wobei die Gasdüse (610) dazu eingerichtet ist, wenigstens eines zuzuführen, aus:

- einem nicht-oxidierenden Gas, insbesondere einem inerten Gas, insbesondere wobei das nicht-oxidierende Gas wenigstens eines aus der Gruppe zwischen Stickstoff, Helium und Argon umfasst; und
- einem reaktiven Gas, welches dazu eingerichtet ist, mit der lateralen Oberfläche (4) des zylindrischen Körpers (1) zu interagieren, um chemische Veränderungen in dem Abschnitt der lateralen Oberfläche (4) des zylindrischen Körpers (1) zu erzeugen, welcher durch den Laserstrahl beeinflusst ist, wobei das reaktive Gas wenigstens eines aus Sauerstoff oder Luft umfasst,

und wobei die Vorrichtung eine Abschirmabdeckung (1000) umfasst, welche ein internes Volumen definiert, welches wenigstens den Arbeitsplatz und den Laseremitter, optional ferner den Profildetektor (700), unterbringt, wobei die Abschirmabdeckung (1000) dazu eingerichtet ist, den Laserstrahl auf das interne Volumen zu begrenzen, um ihm am Entweichen zu hindern, und wobei das interne Volumen der Abschirmabdeckung (1000) lediglich durch eine Filtervorrichtung, welche dazu eingerichtet ist, das Entweichen von Metallstaub, welcher durch den Abtragungsvorgang erzeugt wird, von dem internen Volumen zu der umgebenden Umwelt zu verhindern, in Verbindung mit der externen Umwelt ist.

13. Vorrichtung nach einem der vorhergehenden Ansprüche, wobei:

- die Vorrichtung eine erste und eine zweite Laserquelle (601, 601") umfasst, welche jeweils durch ein jeweiliges Kabel, insbesondere ein Glasfaserkabel, mit dem Laseremitter (600) verbunden sind, insbesondere wobei das Kabel der ersten Quelle und das Kabel der zweiten Laserquelle in den gleichen Laseremitter (600) münden,

wobei die erste Laserquelle (601) dazu eingerichtet ist, einen ersten Laserstrahl zu erzeugen; und wobei die zweite Laserquelle (601") dazu eingerichtet ist, einen zweiten Laserstrahl zu erzeugen; wobei der erste Laserstrahl wenigstens einen Steuerparameter, insbesondere eine Spitzenleistung oder eine Dauer von Laserpulsen, oder eine unterschiedliche Wellenlänge zu dem zweiten Laserstrahl umfasst, wobei die Steuereinheit dazu eingerichtet ist, die erste oder zweite Laserquelle (601, 601") selektiv zu aktivieren, um den jeweiligen Laserstrahl zu dem Laseremitter zu emittieren, oder wobei:

- die Vorrichtung den Laseremitter (600) und einen Hilfslaseremitter (600") umfasst, welche voneinander verschieden sind und an unterschiedlichen Positionen in dem Arbeitsplatz angeordnet sind,

wobei die Vorrichtung ferner umfasst:

- eine erste Laserquelle (601), welche durch ein jeweiliges erstes Kabel, insbesondere ein Glasfaserkabel, mit dem Laseremitter (600) verbunden ist, und
- eine zweite Laserquelle (601"), welche durch ein jeweiliges zweites Kabel, insbesondere ein Glasfaserkabel, mit dem Hilfslaseremitter verbunden ist,

wobei die erste Laserquelle (601) dazu eingerichtet ist, einen ersten Laserstrahl zu erzeugen, und wobei die zweite Laserquelle (601") dazu eingerichtet ist, einen zweiten Laserstrahl zu erzeugen; wobei der Laseremitter (600) dazu eingerichtet ist, den ersten Laserstrahl entlang einer ersten Emissionsrichtung zu emittieren, während der Hilfslaseremitter (600") dazu eingerichtet ist, den zweiten Laserstrahl entlang einer zweiten Emissionsrichtung zu emittieren, wobei die erste Emissionsrichtung und die zweite Emissionsrichtung unterschiedliche Bereiche der Betriebsstelle oder, während eines Betriebszustands, unterschiedliche Abschnitte der lateralen Oberfläche (4) des zylindrischen Körpers (1) schneiden, und wobei die Steuereinheit dazu eingerichtet ist, die erste und zweite Laserquelle (601, 601") gleichzeitig oder selektiv zu aktivieren, um den jeweiligen Laserstrahl zu emittieren, optional wobei:

- der erste Laserstrahl wenigstens einen Steuerparameter oder eine Wellenlänge umfasst, welche unterschiedlich zu dem zweiten Laserstrahl sind, wobei die Steuereinheit dazu eingerichtet ist, die erste und zweite Laserquelle gleichzeitig oder selektiv zu aktivieren, um den jeweiligen Laserstrahl zu emittieren, oder

- der erste Laserstrahl und der zweite Laserstrahl die gleiche Wellenlänge aufweisen, und wobei die Steuereinheit dazu eingerichtet ist, die erste und zweite Laserquelle gleichzeitig oder selektiv zu aktivieren, um den jeweiligen Laserstrahl zu emittieren.

14. Vorrichtung nach einem der vorhergehenden Ansprüche, wobei die Steuereinheit (15) dazu eingerichtet ist, während des Abtragungsvorgangs (2002) den wenigstens einen Laseremitter (600, 600") zu befehligen, um einen pulsierten Laserstrahl zu emittieren, welcher dazu geeignet ist, Material von dem zylindrischen Körper (1) abzutragen,

und wobei der Abtragungsvorgang (2002) umfasst:

- Bewegen (2002a) wenigstens eines aus dem zylindrischen Körper (1) und dem wenigstens einen Laseremitter (600, 600"), optional in Rotation Versetzen des zylindrischen Körpers (1) um seine Rotationsachse (K), und
- Befehligen des wenigstens einen Laseremitters (600, 600"), um den pulsierten Laserstrahl zu emittieren (2002b), wobei die Pulse dazu in der Lage sind, Material von dem zylindrischen Körper (1) abzutragen,

wobei die Laserstrahlpulse temporär versetzt zueinander sind,
wobei jeder Puls, welcher in Richtung der lateralen Oberfläche (4) des zylindrischen Körpers (1) gerichtet ist, dazu eingerichtet ist, an der lateralen Oberfläche (4) des zylindrischen Körpers (1) während des Betriebszustands der Vorrichtung einen jeweiligen Laserabdruck (40) zu definieren, wobei die Laserpulse durch Definieren von Laserabdrücken wenigstens teilweise miteinander überlappen, indem jeweilige Überlappungsabschnitte (41) zwischen den Laserabdrücken gebildet werden,
und wobei der Schritt eines Bewegens wenigstens eines aus dem zylindrischen Körper (1) und dem wenigstens einen Laseremitter (600, 600") und der Schritt eines Befehligens des wenigstens einen Laseremitters (600, 600"), um einen pulsierten Laserstrahl zu emittieren (2002b), gleichzeitig miteinander sind.

15. Verfahren zur Oberflächenwiederherstellung zylindrischer Körper (1), optional mittels einer Vorrichtung nach einem der vorhergehenden Ansprüche, wobei der zylindrische Körper (1) durch Rotation um eine Rotationsachse (K) bewegbar ist und eine laterale Oberfläche (4) umfasst, welche sich der Länge nach zwischen einem ersten und einem zweiten Ende des zylindrischen Körpers (1) erstreckt,
wobei das Verfahren wenigstens einen Wiederherstellungsvorgang (2000) der lateralen Oberfläche (4) des zylindrischen Körpers (1) umfasst, wobei der Wiederherstellungsvorgang (2000) umfasst:

einen Detektionsvorgang (2001), welcher wenigstens die folgenden Schritte umfasst:

- Detektieren, unter Verwendung eines Profildetektors (700), eines Oberflächenprofils (DSP) der lateralen Oberfläche (4) des zylindrischen Körpers (1);
- Vergleichen des detektierten Oberflächenprofils mit einem Zieloberflächenprofil (TSP) des zylindrischen Körpers (1);

- einen Abtragungsvorgang (2002), welcher gemäß dem Vergleich durchgeführt wird, umfassend die Phase, aus:
- Emittieren eines Laserstrahls durch einen Laseremitter (600, 600") in Richtung der lateralen Oberfläche (4) des zylindrischen Körpers (1), um das Zieloberflächenprofil (TSP) zu erreichen, wobei der Laserstrahl Metallmaterial lokal von dem zylindrischen Körper (1) abträgt,

**dadurch gekennzeichnet, dass** eine Steuereinheit (15) dazu eingerichtet ist, das Zieloberflächenprofil (TSP) gemäß dem detektierten Oberflächenprofil (DSP) zu berechnen, so dass, falls das Zieloberflächenprofil (TSP) das detektierte Oberflächenprofil (DSP) schneidet, die Steuereinheit dazu eingerichtet ist, ein neues Zieloberflächenprofil (TSP) zu berechnen, welches das detektierte Oberflächenprofil (DSP) nicht schneidet.

**Revendications**

1. Appareil (10) de traitement de surface de corps cylindriques (1), spécialement pour une restauration de surface de cylindres de laminage,

ledit appareil incluant :

- un poste de travail (100) définissant au moins une localisation opérationnelle agencée pour recevoir, sous une condition d'exploitation de l'appareil (10), un corps cylindrique (1) ayant une surface latérale (4), ledit poste de travail (100) étant configuré pour supporter en rotation le corps cylindrique (1) selon un axe de rotation (K) prédéterminé,
- au moins un émetteur laser (600, 600") coopérant avec le poste de travail (100) et configuré pour émettre au moins un faisceau laser dans la direction d'un site d'exploitation,
ledit émetteur laser (600, 600") étant mobile au moins le long d'un axe principal (Z) parallèle à l'axe de rotation (K) du corps cylindrique (1),
- au moins un détecteur de profil (700) mobile au moins le long d'un axe de détection (Y) parallèle à l'axe de rotation (K) du corps cylindrique (1) et configuré pour détecter, sous ladite condition d'utilisation de l'appareil, un profil de surface détecté de la surface latérale (4) du corps cylindrique (1),
- une unité de commande (15) fonctionnellement raccordée à l'émetteur laser (600, 600") et à le au moins un détecteur de profil (700), ladite unité de commande (15) étant configurée pour exécuter, durant ladite condition d'utilisation de l'appareil (1), au moins une procédure de restauration de la surface latérale (4) du corps cylindrique (1), ladite procédure de restauration incluant :

  ◦ une procédure de détection incluant au moins les étapes suivantes consistant à :

    ▪ détecter, à l'aide dudit détecteur de profil (700), un profil de surface détecté (detected surface profile, DSP) du corps cylindrique (1) ;
    ▪ comparer ledit profil de surface détecté (DSP) à un profil de surface cible (target surface profile, TSP) du corps cylindrique (1) ;

  ◦ une procédure d'élimination, exécutée en fonction de ladite comparaison, incluant au moins l'étape suivante consistant à :

    ▪ émettre le faisceau laser à travers l'émetteur laser (600, 600") vers la surface latérale (4) du corps cylindrique (1) pour obtenir ledit profil de surface cible (TSP), ledit faisceau laser étant configuré pour retirer localement du matériau métallique du corps cylindrique (1),

  **caractérisé par le fait que** l'unité de commande (15) est configurée pour calculer le profil de surface cible (TSP) en fonction du profil de surface détecté (DSP), de sorte que si le profil de surface cible (TSP) entre en intersection avec le profil de surface détecté (DSP), l'unité de commande est configurée pour calculer un nouveau profil de surface cible (TSP) qui n'entre pas en intersection avec le profil de surface détecté (DSP).

2. Appareil selon la revendication précédente, dans lequel ledit profil de surface détecté (DSP) et ledit profil de surface cible (TSP) du corps cylindrique (1) comprennent au moins une caractéristique géométrique variable dépendant d'au moins l'une parmi :

- une position angulaire du corps cylindrique (1), et
- une position linéaire le long de l'axe de détection (Y),

et dans lequel ladite au moins une caractéristique géométrique du profil de surface détecté (DSP) inclut au moins un paramètre altimétrique respectif représentatif d'un diamètre du corps cylindrique (1) et/ou d'une variation dudit diamètre du corps cylindrique (1) et/ou d'une distance interposée, en particulier d'une distance orthogonale, entre la surface latérale (4) du corps cylindrique (1) et le détecteur de profil (700),
dans lequel ladite au moins une caractéristique géométrique du profil de surface cible (TSP) inclut au moins un paramètre altimétrique cible respectif représentatif d'un diamètre du corps cylindrique (1) et/ou d'une variation dudit diamètre du corps cylindrique (1) et/ou d'une distance interposée, en particulier d'une distance orthogonale dans une condition d'exploitation et ultérieure à la procédure d'élimination, entre la surface latérale (4) du corps cylindrique (1) et le détecteur de profil (700),

l'unité de commande étant également configurée pour :

- déplacer le détecteur de profil (700) le long de l'axe de détection (Y) ;
- détecter, durant ledit mouvement du détecteur de profil (700) le long de l'axe de détection (Y), la au moins une caractéristique géométrique dudit profil de surface (DSP) à l'aide du détecteur de profil (700), et
- associer à ladite au moins une caractéristique géométrique du profil de surface détecté (DSP) du corps cylindrique (1) une position linéaire respective le long de l'axe de détection (Y),

et éventuellement :

- déplacer le corps cylindrique (1) en rotation autour de l'axe de rotation (K), spécifiquement à l'aide d'un moteur électrique fonctionnellement raccordé au corps cylindrique, et
- détecter le profil de surface (DSP) en utilisant le détecteur de profil (700) durant la rotation du corps cylindrique ;
- éventuellement, associer à ladite au moins une caractéristique géométrique du profil de surface détecté (DSP) du corps cylindrique (1) une position angulaire respective du corps cylindrique (1).

**3.** Appareil selon l'une quelconque des revendications précédentes, dans lequel l'unité de commande (15) est configurée, durant la procédure d'élimination, pour commander à l'émetteur laser (600, 600") d'émettre un faisceau laser pulsé,

ledit faisceau laser pulsé étant configuré pour éliminer du matériau du corps cylindrique (1), ledit matériau étant du métal,
dans lequel l'unité de commande est configurée pour émettre un faisceau laser pulsé ayant une puissance pic supérieure à une puissance moyenne relative, spécifiquement ladite puissance pic étant 10, 100 ou 1 000 fois supérieure à la puissance moyenne relative,
en particulier dans lequel lesdites impulsions présentent :

- une durée entre 100 fs et 1 000 ns ou entre 1 fs et 1 000 $\mu$s, et/ou
- une puissance pic entre 1 kW et 10 MW, spécifiquement entre 10 kW et 2 MW.

**4.** Appareil selon l'une quelconque des revendications précédentes, dans lequel la comparaison entre ledit profil de surface détecté (DSP) et ledit profil de surface cible (TSP) définit un paramètre de profil différentiel du corps cylindrique (1), ledit paramètre de profil différentiel étant représentatif d'une différence ou d'un ratio entre ledit profil de surface détecté (DSP) et ledit profil de surface cible (TSP),

et dans lequel l'unité de commande, durant la procédure d'élimination, est configurée pour ajuster, en fonction dudit paramètre de profil différentiel, au moins un paramètre de travail de l'appareil dans le groupe compris entre :

- au moins un paramètre de commande du faisceau laser émis par l'émetteur laser (600, 600"), ledit paramètre de commande incluant au moins l'une parmi une puissance moyenne du faisceau laser, une puissance pic du faisceau laser, une durée des impulsions du faisceau laser, une durée des intervalles entre les impulsions du faisceau laser, une taille du faisceau laser, une distance entre l'émetteur laser (600, 600") et la surface externe du corps cylindrique (1) ;
- une vitesse de déplacement de l'émetteur laser (600, 600") le long de la direction principale (Z) durant une émission d'un faisceau laser vers la surface externe du corps cylindrique (1) ;
- une vélocité angulaire du corps cylindrique (1) autour de son axe de rotation (K) durant une émission d'un faisceau laser vers la surface externe du corps cylindrique (1) ;
- un nombre de passages dans lesquels le faisceau laser insiste sur la même portion de la surface latérale (4) du corps cylindrique (1) ;
- une durée d'exposition dans laquelle ledit faisceau laser insiste sur la même portion de la surface latérale (4) du corps cylindrique (1), spécifiquement ladite durée dépendant de ladite vélocité angulaire du corps cylindrique (1) et de ladite vélocité de déplacement de l'émetteur laser (600, 600") ;
- un paramètre d'énergie représentatif d'une énergie émise par le faisceau laser au niveau de la même portion de la surface latérale (4) du corps cylindrique (1),

en particulier où ledit paramètre d'énergie dépend d'une combinaison d'au moins deux dans le groupe entre :

EP 4 380 737 B1

∘ ledit au moins un paramètre de commande de l'émetteur laser (600, 600"),
∘ ladite vitesse de déplacement de l'émetteur laser (600, 600") le long de l'axe principal (Z),
∘ ladite vélocité angulaire du corps cylindrique (1) autour de son axe de rotation (K),
∘ ladite durée d'exposition,
∘ ledit nombre de passages.

5. Appareil selon la revendication précédente, dans lequel l'unité de commande est configurée pour :

- à mesure que la valeur dudit paramètre différentiel augmente :

∘ accroître au moins l'une parmi la puissance moyenne, la puissance pic du faisceau laser, la durée d'exposition, et le nombre de passages du faisceau laser insistant sur la même portion de la surface latérale (4), spécialement accroître la puissance pic du faisceau laser ; et/ou
∘ réduire au moins l'une parmi la vélocité angulaire du corps cylindrique (1), la vélocité de déplacement de l'émetteur laser (600, 600") le long de la direction principale (Z) ;

- à mesure que la valeur dudit paramètre différentiel diminue :

∘ réduire au moins l'un parmi la puissance moyenne, la puissance pic du faisceau laser, la durée d'exposition, et le nombre de passages du faisceau laser insistant sur la même portion de la surface latérale (4), réduire spécialement la puissance pic du faisceau laser ; et/ou
∘ accroître au moins l'une parmi la vélocité angulaire du corps cylindrique (1), la vélocité de déplacement de l'émetteur laser (600, 600") le long de la direction principale (Z),

en particulier où ledit paramètre différentiel est proportionnel à une quantité du matériau à éliminer interposé entre le profil de surface détecté (DSP) et le profil de surface cible (TSP).

6. Appareil selon l'une quelconque des revendications précédentes en combinaison avec les revendications 2 et 4, dans lequel ledit paramètre différentiel est variable selon la position angulaire du corps cylindrique (1) et/ou le long de l'axe de détection (Y).

7. Appareil selon l'une quelconque des revendications précédentes, où la procédure d'élimination inclut :

- le réglage d'un paramètre prédéterminé de commande de l'émetteur laser ;
- éventuellement un réglage d'une vélocité angulaire du corps cylindrique (1) autour de l'axe de rotation (K) et/ou le réglage d'une vélocité de déplacement du détecteur de profil (700) le long de l'axe de détection (Y) ;
- déterminer ou recevoir comme entrée un indice d'élimination représentatif d'une épaisseur de matériau retiré de la surface latérale (4) du corps cylindrique (1) durant un passage unique du faisceau laser ;
- en fonction du paramètre différentiel du profil et dudit indice d'élimination, calculer un nombre de passages de l'émetteur laser requis pour obtenir ledit profil de surface cible (TSP), éventuellement ledit nombre de passages étant calculé comme le ratio du paramètre différentiel du profil audit indice d'élimination, en particulier ledit ratio étant estimé par défaut par un nombre entier,
dans lequel lorsque la puissance pic des impulsions du faisceau laser augmente, l'indice d'élimination augmente et le nombre de passages du laser requis pour obtenir le profil de surface cible (TSP) baisse en conséquence, et dans lequel lorsque la puissance pic des impulsions du faisceau laser baisse, l'indice d'élimination baisse et le nombre de passages du laser requis pour obtenir le profil de surface cible (TSP) augmente en conséquence.

8. Appareil selon l'une quelconque des revendications précédentes, dans lequel l'étape de détection, à l'aide dudit détecteur de profil (700), du profil externe du corps cylindrique (1) comprend les étapes consistant à :

- faire tourner de manière angulaire le corps cylindrique (1) autour de son axe de rotation (K), et
- déplacer le détecteur de profil (700) le long de l'axe de détection (Y) pour couvrir au moins partiellement, spécialement entièrement, une longueur de la surface externe du corps cylindrique (1), ladite longueur étant mesurée parallèle à l'axe de rotation (K) du corps cylindrique (1),

particulièrement lesdites étapes de rotation et de déplacement étant exécutées dans cet ordre ou en ordre inverse, ou simultanément,
et dans lequel l'unité de commande, durant la procédure d'élimination, est configurée pour :

34

- faire tourner le corps cylindrique (1) ;
- déplacer l'émetteur laser le long de l'axe principal (Z) ;
- émettre le faisceau laser à travers l'émetteur laser dans la direction du site de travail pour retirer du matériau métallique de la surface latérale (4) du corps cylindrique (1),

dans lequel les étapes de rotation du corps cylindrique (1) et de déplacement de l'émetteur laser sont exécutées dans cet ordre ou en ordre inverse, ou simultanément, à une couverture complète du profil de surface du corps cylindrique (1).

9. Appareil selon l'une quelconque des revendications précédentes, dans lequel la procédure de restauration inclut l'exécution de la procédure de détection et de la procédure d'élimination de manière itérative en boucle pour définir un système de commande en boucle fermée, éventuellement dans lequel une telle boucle définit un nombre progressif de passages du faisceau laser au niveau de la même portion du corps cylindrique,

dans lequel la procédure d'élimination implique la réalisation au moins d'un premier et d'un second passage, éventuellement la réalisation de « *n* » passages avec $2 \leq n \leq 20$, du faisceau laser au niveau d'une ou plusieurs portions d'intérêt de la surface latérale (4) du corps cylindrique (1) pour éliminer une quantité prédéterminée de matériau durant chaque passage,
et dans lequel l'unité de commande est configurée pour :

- commander, temporellement entre lesdits premier et second passage, le détecteur de profil (700) pour détecter un profil mis à jour du corps cylindrique (1) au niveau de ladite portion d'intérêt,
- comparer ledit profil mis à jour au profil de surface cible (TSP) ;
- moduler le faisceau laser émis par l'émetteur laser (600, 600") durant le second passage en fonction de ladite comparaison entre le profil mis à jour et le profil de surface cible (TSP) et mettre à jour le paramètre différentiel respectif, ladite étape de modulation dépendant dudit paramètre différentiel mis à jour,

éventuellement dans lequel lesdits premier et second passage ne sont pas nécessairement consécutifs.

10. Appareil selon l'une quelconque des revendications précédentes, dans lequel l'unité de commande est configurée pour commander au moins l'un des paramètres de travail suivants :

- une puissance moyenne ou pic de l'émetteur laser (600, 600"), ladite puissance moyenne ou pic étant ajustable entre une puissance minimale (Pmin) et une puissance maximale (Pmax) ;
- une durée d'impulsion du faisceau laser, ladite durée d'impulsion du laser étant ajustable entre une durée minimale d'impulsion laser (Tmin) et une durée maximale d'impulsion laser (Tmax),

en particulier dans lequel ladite unité de commande est configurée pour moduler à la fois la puissance de l'émetteur laser (600, 600") et la durée d'une impulsion du faisceau laser.

11. Appareil selon l'une quelconque des revendications précédentes, dans lequel l'unité de commande est configurée pour définir, durant la procédure d'élimination, une procédure de dégrossissage comprenant au moins l'une des étapes parmi :

- commander à l'émetteur laser (600, 600") de générer un faisceau laser pulsé, chacune desdites impulsions ayant une durée initiale en particulier à l'intérieur d'un ordre de magnitude compris entre 1 ns et 1 000 ns ;
- éventuellement commander à l'émetteur laser (600, 600") de générer un faisceau laser ayant une taille inférieure à 50 $\mu$m, spécifiquement inférieure à 20 $\mu$m, ladite taille étant le diamètre du faisceau,
l'unité de commande étant également configurée pour définir, durant la procédure d'élimination, une procédure de semi-finition incluant au moins l'une parmi les étapes consistant à :

- commander à l'émetteur laser (600, 600") de générer un faisceau laser pulsé, chacune desdites impulsions ayant une seconde durée plus courte que ladite première durée, en particulier ladite seconde durée étant au moins 10, 100 ou 1 000 fois inférieure à ladite première durée, ladite seconde durée se situe en particulier à l'intérieur d'un ordre de magnitude compris entre 1 fs et 1 000 ps, préférablement inférieur à 10 ps ;
- éventuellement commander à l'émetteur laser (600, 600") de générer un faisceau laser ayant une taille inférieure à 50 $\mu$m, spécifiquement inférieure à 20 $\mu$m, ladite taille étant le diamètre du faisceau,

dans lequel la procédure de dégrossissage est configurée pour définir sur la surface latérale (4) du corps cylindrique (1) une première rugosité de surface, et dans lequel la procédure de semi-finition est configurée pour définir sur la surface latérale (4) du corps cylindrique (1) une seconde rugosité de surface, ladite première rugosité de surface étant supérieure à la seconde rugosité de surface, spécifiquement ladite première rugosité de surface étant « n » fois supérieure à la seconde rugosité de surface avec 1,1 < n < 5

éventuellement dans lequel :

- la puissance moyenne de l'émetteur laser (600, 600") durant la procédure de dégrossissage est la même que la puissance moyenne de l'émetteur laser (600, 600") durant la procédure de semi-finition, ladite puissance moyenne étant en particulier comprise entre 0,5 W et 500 W, en particulier entre 1 W et 200 W, et/ou

- la puissance pic du faisceau laser émis par l'émetteur laser (600, 600") durant la procédure de dégrossissage est inférieure à la puissance pic du faisceau laser émis par l'émetteur laser (600, 600") durant la procédure de semi-finition, ladite puissance pic du faisceau laser dans la procédure de dégrossissage étant 10, 100 ou 1 000 fois inférieure à la puissance pic du faisceau laser dans la procédure de semi-finition,

spécifiquement ladite puissance pic du faisceau laser dans la procédure de dégrossissage étant comprise entre 10 kW et 100 kW, et ladite puissance pic du faisceau laser dans la procédure de semi-finition étant comprise entre 10 kW et 10 MW,

éventuellement dans lequel :

- la première rugosité de surface est comprise entre 0,8 $\mu$m et 2,0 $\mu$m ;

- la seconde rugosité de surface est comprise entre 0,2 $\mu$m et 0,8 $\mu$m, et dans lequel ledit émetteur laser est configuré pour émettre, durant la procédure de dégrossissage et/ou de semi-finition, un faisceau laser ayant une longueur d'onde comprise entre 0,3 $\mu$m et 1 $\mu$m ; dans lequel l'unité de commande est configurée pour définir, durant la procédure d'élimination, une procédure de finition comprenant au moins une étape parmi celles consistant à:

- commander à l'émetteur laser (600, 600") de générer un faisceau laser du type :

○ continu, ou
○ avec des impulsions, lesdites impulsions ayant :

▪ une durée respective supérieure à la durée des impulsions du faisceau laser émises dans la procédure de dégrossissage et la procédure de semi-finition, en particulier ladite durée des impulsions dans la procédure de finition se situant à l'intérieur d'un ordre de magnitude entre 1 $\mu$s et 1 000 ms ; et/ou

▪ une puissance pic respective inférieure à une puissance pic du faisceau laser émis dans la procédure de dégrossissage et la procédure de semi-finition, en particulier ladite puissance pic du faisceau laser de la procédure de finition étant 10, 100 ou 1 000 fois inférieure à une puissance pic du faisceau laser émis dans la procédure de dégrossissage et la procédure de semi-finition,

- éventuellement commander à l'émetteur laser (600, 600") de générer un faisceau laser ayant une taille supérieure à 100 $\mu$m, en particulier supérieure à 200 $\mu$m, ladite taille étant spécifiquement comprise entre 100 $\mu$m et 500 $\mu$m,

dans lequel la procédure de finition est configurée pour définir sur la surface latérale (4) du corps cylindrique (1) une rugosité de surface de finition inférieure à 0,5 $\mu$m, spécifiquement inférieure à 0,4 $\mu$m, spécifiquement comprise entre 0,05 $\mu$m et 0,4 $\mu$m.

12. Appareil selon l'une quelconque des revendications précédentes, dans lequel l'appareil comprend une buse de gaz (610) configurée pour délivrer un flux de gaz dans la direction d'une portion de la surface latérale (4) du corps cylindrique (1) affectée par le faisceau laser, éventuellement ladite portion de surface latérale (4) étant la portion de travail de la surface latérale (4) du corps cylindrique (1),

dans lequel ladite buse de gaz (610) est configurée pour délivrer au moins l'un parmi :

- un gaz non oxydant, particulièrement un gaz inerte, particulièrement ledit gaz non oxydant incluant au moins l'un dans le groupe compris entre l'azote, l'hélium, et l'argon ; et

- un gaz réactif configuré pour interagir avec la surface latérale (4) du corps cylindrique (1) pour générer des changements chimiques dans ladite portion de la surface latérale (4) du corps cylindrique (1) affectée par le faisceau laser, ledit gaz réactif comprenant au moins l'un parmi l'oxygène, ou l'air,

et où l'appareil inclut un couvercle de protection (1000) définissant un volume interne logeant au moins le poste de travail et un émetteur laser, éventuellement également le détecteur de profil (700),
ledit couvercle de protection (1000) étant configuré pour confiner le faisceau laser à l'intérieur dudit volume interne l'empêchant de s'échapper,
et dans lequel le volume interne dudit couvercle de protection (1000) se trouve en communication avec l'environnement externe uniquement à travers un dispositif de filtration configuré pour empêcher la fuite de poussière métallique, générée par la procédure d'élimination, du volume interne vers le milieu environnant.

**13.** Appareil selon l'une quelconque des revendications précédentes, dans lequel :

- l'appareil inclut une première et une seconde source laser (601, 601") chacune raccordée par un câble respectif, spécialement un câble à fibre optique, audit émetteur laser (600), spécifiquement le câble de la première source et le câble de la seconde source laser s'écoulant dans le même émetteur laser (600),

dans lequel ladite première source laser (601) est configurée pour émaner un premier faisceau laser ;
et dans lequel ladite seconde source laser (601") est configurée pour émaner un second faisceau laser ;
ledit premier faisceau laser incluant au moins un paramètre de commande, particulièrement une puissance pic ou une durée d'impulsions laser, ou une longueur d'onde différente depuis ledit second faisceau laser, dans lequel l'unité de commande est configurée pour activer sélectivement la première ou la seconde source laser (601, 601") afin d'émettre le faisceau laser respectif vers l'émetteur laser,
ou où :

- l'appareil inclut ledit émetteur laser (600) et un émetteur laser auxiliaire (600") qui sont distincts l'un de l'autre et localisés à des positions différentes dans le poste de travail,

l'appareil incluant en outre :

∘ une première source laser (601) raccordée par un premier câble respectif, spécifiquement un câble à fibre optique, audit émetteur laser (600), et
∘ une seconde source laser (601") raccordée par un second câble respectif, spécifiquement un câble à fibre optique, audit émetteur laser auxiliaire,

dans lequel ladite première source laser (601) est configurée pour émaner un premier faisceau laser,
et dans lequel ladite seconde source laser (601") est configurée pour émaner un second faisceau laser ;
dans lequel l'émetteur laser (600) est configuré pour émettre le premier faisceau laser le long d'une première direction d'émission, tandis que l'émetteur laser auxiliaire (600") est configuré pour émettre le second faisceau laser le long d'une seconde direction d'émission, dans lequel ladite première direction d'émission et ladite seconde direction d'émission entrent en intersection avec différentes zones du site d'exploitation ou, durant une condition d'exploitation, avec différentes portions de la surface latérale (4) du corps cylindrique (1),
et dans lequel l'unité de commande est configurée pour activer simultanément ou sélectivement la première et la seconde source laser (601, 601") afin d'émettre le faisceau laser respectif, éventuellement dans lequel :

∘ ledit premier faisceau laser inclut au moins un paramètre de commande ou une longueur d'onde différente dudit second faisceau laser, dans lequel l'unité de commande est configurée pour activer simultanément ou sélectivement la première et la seconde source laser afin d'émettre le faisceau laser respectif,
ou
∘ ledit premier faisceau laser et ledit second faisceau laser ont la même longueur d'onde, et dans lequel l'unité de commande est configurée pour activer simultanément ou sélectivement la première et la seconde source laser afin d'émettre le faisceau laser respectif.

**14.** Appareil selon l'une quelconque des revendications précédentes, dans lequel l'unité de commande (15) est configurée, durant la procédure d'élimination (2002), pour commander à le au moins un émetteur laser (600, 600") d'émettre un faisceau laser pulsé convenant pour éliminer du matériau du corps cylindrique (1),

et dans lequel la procédure d'élimination (2002) inclut les étapes consistant à :

- déplacer (2002a) au moins l'un entre ledit corps cylindrique (1) et ledit au moins un émetteur laser (600, 600"), éventuellement placer le corps cylindrique (1) en rotation autour de son axe de rotation (K), et
- commander à le au moins un émetteur laser (600, 600") d'émettre (2002b) ledit faisceau laser pulsé, lesdites impulsions étant capables d'éliminer du matériau du corps cylindrique (1),

lesdites impulsions du faisceau laser étant temporellement échelonnées l'une par rapport à l'autre, dans lequel chaque impulsion dirigée vers la surface latérale (4) du corps cylindrique (1) est configurée pour définir, sur ladite surface latérale (4) du corps cylindrique (1) durant ladite condition d'exploitation de l'appareil, une empreinte laser respective (40), lesdites impulsions laser en définissant des empreintes laser se chevauchant au moins partiellement l'une l'autre en formant des portions de chevauchement respectives (41) entre lesdites empreintes laser,

et dans lequel l'étape de déplacement d'au moins l'un entre ledit corps cylindrique (1) et ledit au moins un émetteur laser (600, 600") et ladite étape de commande du au moins un émetteur laser (600, 600") pour émettre (2002b) un faisceau laser pulsé sont simultanées l'une par rapport à l'autre.

15. Procédé de restauration de surface de corps cylindriques (1), éventuellement à l'aide d'un appareil selon l'une quelconque des revendications précédentes, dans lequel ledit corps cylindrique (1) est mobile par rotation autour d'un axe de rotation (K) et inclut une surface latérale (4) s'étendant en longueur entre une première et une seconde extrémité du corps cylindrique (1),

ledit procédé incluant au moins une procédure de restauration (2000) de la surface latérale (4) du corps cylindrique (1), ladite procédure de restauration (2000) incluant :

◦ une procédure de détection (2001) incluant au moins les étapes suivantes consistant à :

▪ détecter, en utilisant un détecteur de profil (700), un profil de surface (DSP) de la surface latérale (4) du corps cylindrique (1) ;
▪ comparer ledit profil de surface détecté à un profil de surface cible (TSP) du corps cylindrique (1) ;

◦ une procédure d'élimination (2002), exécutée selon ladite comparaison, incluant la phase consistant à :

▪ émettre un faisceau laser à travers un émetteur laser (600, 600") vers la surface latérale (4) du corps cylindrique (1) pour atteindre ledit profil de surface cible (TSP), ledit faisceau laser éliminant localement du matériau métallique du corps cylindrique (1),

**caractérisé en ce qu'**une unité de commande (15) est configurée pour calculer le profil de surface cible (TSP) selon le profil de surface détecté (DSP), de sorte que si le profil de surface cible (TSP) entre en intersection avec le profil de surface détecté (DSP), l'unité de commande est configurée pour calculer un nouveau profil de surface cible (TSP) qui n'entre pas en intersection avec le profil de surface détecté (DSP).

EP 4 380 737 B1

FIG. 1

FIG. 2

FIG. 3

FIG. 4

FIG. 5

FIG. 6a

FIG. 6b

FIG. 6c

FIG. 6d

FIG. 6e

FIG. 6f

FIG. 6g

FIG. 6h

FIG. 6i

FIG. 6l

FIG. 6m

FIG. 6n

FIG. 6p

FIG. 7a

FIG. 7b

2000

2001

2002

FIG. 8

FIG. 9

FIG. 10

FIG. 11

FIG. 12

$$Z = (L \cdot f_{osc})/f_{pulse}$$

FIG. 12b

2000

2002

2002a

2002b

2002c

FIG. 13

2000

2001

2002

2002a

2002b

2002c

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S59179207 A